# EUROPEAN PATENT APPLICATION

(11) **EP 1 935 957 A1**
(43) Date of publication of application: **25.06.2008**
(21) Application number: 06810695.4
(22) Date of filing: 28.09.2006
(51) Int. Cl.: C09K 3/14

(54) **POLISHING AGENT**

(30) Priority: 11.10.2005 JP 2005295914
(71) Applicant: Sako, Masato, Hioki-shi, Kagoshima 8993301 (JP)
(72) Inventor: Sako, Masato, Hioki-shi, Kagoshima 8993301 (JP)
(74) Representative: Henseler, Daniela
(86) International application number: PCT/JP2006/319237
(87) International publication number: WO 2007/043343

(57) **Abstract**

An abrasive is provided which is able to efficiently remove stains and dirt attached to a glass surface and the like with excellent workability and safety. The abrasive is prepared to contain Shirasu balloons having a particle size of 10 to 100 µm, ground hollow particles which are obtained by grinding the Shirasu balloons and have a particle size of 5 to 30 µm, cerium oxide particles having a particle size of 0.5 to 5 µm, a thickener, and water.

## Description

### Technical Field

The present invention relates to an abrasive for polishing the surface of an article such as a glass product, porcelain enamel product, tile product, or metal product, or the surface of a floor such as a rock floor, wood floor, synthetic resin floor, linoleum floor, brick floor, or metal floor.

### Background Art

When a glass product, a porcelain enamel product, a tile product, a metal product or the like is used, stains and dirt such as an oil film and water scale attach to the surface of the product.
For example, when a car is driven through a town, various stains and dirt attach to the windowpanes of the car. Small particles of oil which are floating in the air attach to the windowpanes and form an oil film. In addition, contaminants in rain or in water which is used to wash the car attach to the windowpane surfaces and form water scale. The oil film and water scale that form on the windowpane surfaces cloud up the windowpanes and cause a glare. The cloudiness and glare on the windowpanes obstruct the view of the driver, which impairs the driver's ability to drive the car safely.

Cleaning agents based on surfactants are widely used to remove oil films and water scale that adhere to the windowpanes of a car. However, such oil films and water scale are often strongly attached to the windowpanes. It is difficult and time consuming for a worker to remove an oil film or water scale that is strongly attached to the windowpanes using a cleaning agent based on a surfactant.
The worker can remove an oil film or water scale attached to the car windowpanes if the worker uses a chemical to chemically clean the windowpanes. However, a chemical used to chemically clean car windowpanes is a strong poison such as hydrogen fluoride. When this type of chemical is used to clean windowpanes, strict supervision and tight control of the chemical are required. For example, treatment of the chemical after using it to clean car windowpanes is a demanding task. The used chemical has to be managed and subjected to proper treatment for detoxification, or treatment thereof must be entrusted to a professional waste disposal enterprise. This places a substantial burden on the environment and worker, and limits the places where the chemical can be used for cleaning work.

Moreover, hydrogen fluoride chemically reacts with glass. There is thus a risk that the surface of a windowpane will be etched by hydrogen fluoride. Etching of a windowpane by hydrogen fluoride makes the windowpane surface uneven. That unevenness causes roughness and white turbidity on the windowpane surface.
Furthermore, if hydrogen fluoride remains on a windowpane after chemical cleaning the windowpane, the residual hydrogen fluoride chemically reacts with the windowpane, resulting in white turbidity thereon. Therefore, it is hard to say that a chemical cleaning method is preferable.

Another method which may be considered is one in which a worker polishes the windowpanes of a car using a polishing tool with a high level of hardness to mechanically abrade off stains and dirt on the windowpanes. However, in this method there is a risk of the windowpane surfaces being scratched by the polishing tool, and so it is necessary to prevent any scratching of the surfaces. Thus, polishing operations must be conducted by a skilled worker, which limits the number of workers who can perform the operations.
A cleaning tool for glass surfaces that takes into account workability and safety has been proposed, for example, in Japanese Patent Laid-Open No. 11-245168. The cleaning tool is manufactured by mixing fine powder of volcanic ash soil and a solidification adjusting agent, kneading the mixture with water, and solidifying the mixture. The fine powder is refined to a fineness on the order of 8 to 10 µm. The solidification adjusting agent is gypsum. A worker pours water over the surface of car windowpanes, and rubs the surface of the windowpanes with the cleaning tool. The fine powders of volcanic ash soil in the cleaning tool scrape off stains and dirt which are attached to the windowpane surfaces.

Further, a place where people walk, such as the floor of a building, is very likely to get stained and dirty. It is then necessary to remove the stains and dirt from the floors by a cleaning operation. Especially, the floors of places such as stores and public facilities where large numbers of people visit are likely to get stained and dirty, and consequently cleaning operations are carried out regularly. In a floor cleaning operation, first, a worker peels off and removes old wax together with stains and dirt from the floor. The old wax is solidified and strongly attached to the floor. Further, the stains and dirt on the floor are mixed with the wax which was coated on the floor, and are often strongly adhered to the floor. Thus, the work to peel off and remove the old wax from the floor together with the stains and dirt is difficult and time consuming.

Therefore, in many cases, a chemical is used to dissolve and remove the old wax. In some cases, a knife or a grinder is used to mechanically peel off and remove the old wax from the floor together with the stains and dirt.
After removing the old wax together with the stains and dirt from the floor, the worker applies a new coat of wax to the floor to complete the cleaning operation.

### Disclosure of the Invention

However, the above described cleaning tool has the following problems.
The fine powder of volcanic ash soil in the cleaning tool is solidified by a solidification adjusting agent to form a unified cleaning tool. A worker then rubs the surface of a car windowpane using the cleaning tool. The fine powder of volcanic ash soil which is exposed on the cleaning tool surface is rubbed against the windowpane surface. The fine powder of volcanic ash soil which is exposed on the cleaning tool surface is liable to get caught in the stains and dirt that attach to the windowpane surface. However, even if the fine powder of volcanic ash soil is caught in the stains and dirt, the worker may not notice that the fine powder has gotten caught and will continue to rub the windowpane surface with the cleaning tool. When this happens, an unreasonable pressure is applied to the windowpane surface by the fine powder of volcanic ash soil, which produces scratches on the windowpane surface.

Therefore, the worker needs to carry out the operation to remove stains and dirt with extreme caution in order to notice when the fine powder of volcanic ash soil gets caught in stains and dirt on the windowpane surface. It is difficult for a worker to work quickly if the worker has to work with extreme caution, and the work efficiency tends to be lowered. Also, it is highly possible that an unskilled worker will not notice when the fine powder of volcanic ash soil gets caught in stains and dirt on the windowpane surface. If the worker continues to rub the windowpane surface with the cleaning tool without noticing that the fine powder is caught, scratches will be formed on the windowpane surface.

Such a problem is not confined to a case where stains and dirt on the windowpanes of a car are to be removed. A similar problem arises when stains and dirt attached to the surface of articles such as glass products, porcelain enamel products, tile products, metal products, and the like are to be removed.
Further, the following problems arise when a worker uses a chemical to dissolve and remove old wax when cleaning the floor of a building or the like.
In the cleaning operation, a strong alkaline chemical is often used to dissolve wax that adheres to a floor. Consequently, the worker must treat the chemical with extreme caution. If the chemical splashes onto the surrounding walls, the place the chemical contacts against will undergo a change in quality or color. Therefore, the worker has to carefully protect the surroundings against splashing and the like before carrying out a cleaning operation, which makes the preparation troublesome for the worker.

Further, if a chemical in which the wax is dissolved spreads over the floor, the floor will become very slippery. The worker must therefore exercise extreme caution to prevent any falling accidents. It is difficult for a worker to quickly carry out the cleaning operation if the worker must exercise extreme caution when carrying out the operation, and thus the work efficiency tends to be lowered.
While a cleaning operation using a chemical is being carried out, passers-by must be prevented from entering the work area. Further, the worker has to complete the operation before the chemical on the floor dries. The worker must also finish the operation after he dissolves old wax with the chemical and before the dissolved wax solidifies. This means that the worker cannot interrupt the cleaning operation once it has started. Therefore, in a busy place with many passers-by, such as a public facility or a store, it is difficult for a worker to increase a surface area to be cleaned in a single cleaning operation, and also difficult for the worker to increase the time to be taken for a single cleaning operation. That is, in busy places with many passers-by, such as public facilities and stores, when a cleaning operation is carried out using a chemical, the worker needs to plan how to carry out a suitable cleaning operation by considering various factors, and thus executing the cleaning operation involves considerable difficulty.

In a case where wax which is solidified and strongly adhered to a floor is dissolved using a chemical, the floor has to be protected from etching by the chemical. For example, a chemical that is harmless for a floor made of polyvinyl chloride is not always harmless for a linoleum floor. It is also difficult to visually tell the difference between a floor made of polyvinyl chloride and a linoleum floor. Therefore, the worker needs to check the floor material by looking up a blueprint or a specification document of the relevant building to select an appropriate chemical. If the worker fails to select an appropriate chemical, the color or quality of the floor will be changed.

The chemical used in the cleaning operation must also be treated in the proper manner. The treatment of the chemical is a complicated operation. The worker has to suitably manage the used chemical and subject the used chemical to proper treatment for detoxification, or entrust treatment thereof to a professional waste disposal enterprise.
When a tool such as a knife or a grinder is used in a cleaning operation to peel off and remove old wax together with stains and dirt from the floor of a building, the following problems arise
When a knife or a grinder is used to peel off and remove old wax from a floor, the floor after removal of the wax often has an uneven surface. Also, in many cases, it is hard for a tool such as a knife or a grinder to reach the boundary between a floor and a wall or the corners of a room. For these types of areas, the worker must patiently remove the old wax manually using a smaller tool. This kind of manual work depends greatly on the skill level of the worker. If a skilled worker is not present, it is likely to be difficult to completely remove the old wax from the floor, and the work efficiency tends to deteriorate significantly.

The above problems in cleaning operations for floors of buildings and the like exist irrespective of the floor materials, and irrespective of whether a floor is an indoor floor or an outdoor floor.
The present invention was made to solve these problems, and one object of the present invention is to provide an abrasive with excellent workability and safety which is capable of efficiently removing stains and dirt attached to the surface of articles such as glass products, porcelain enamel products, tile products, metal products, and the like, or the surface of a floor such as a rock floor, a wood floor, a synthetic resin floor, a linoleum floor, a brick floor, a metal floor, and the like.

In this connection, stains and dirt that are attached to a floor surface include old wax that is attached to the floor surface.
In order to solve these problems, the present invention is configured as follows. An abrasive according to the invention set forth in claim 1 includes: hollow particles which are obtained by firing and expanding a volcanic glass; ground hollow particles which are obtained by grinding the hollow particles; a thickener; and water, and the included hollow particles have a particle size of 10 to 100 µm, and the included ground hollow particles have a particle size of 5 to 30 µm.
According to the invention set forth in claim 1, the abrasive includes hollow particles, ground hollow particles, a thickener, and water. The hollow particles and the ground hollow particles are dispersed in the abrasive by means of the thickener.

The hollow particles are manufactured by firing and expanding a volcanic glass, and have individually a hollow portion therein. The hollow portion of the hollow particle may be independent from the outside or may be in communication with the outside. The ground hollow particles which are obtained by grinding the hollow particles have edges at the surfaces thereof. The edges are formed in the grinding of the hollow particles.
The volcanic glass as the raw material of the hollow particles is available from vitreous volcanic rock and vitreous pyroclastic material. Vitreous volcanic rock is the generic name for crude perlite, obsidian, pitchstone, and the like, and mainly consists of volcanic glass. Vitreous pyroclastic material is a solid substance discharged in fragments on the ground by volcanic activities, and is glassy. Accumulated vitreous pyroclastic material is referred to as ash soil, volcanic ash, Shirasu, or silica sand, for example. Examples of vitreous pyroclastic materials in Japan include Biei ash soil in Hokkaido, Fukushima ash soil in the Tohoku region, Kakuto Shirasu in the Kyshu region, Yoshida Shirasu in the Kyshu region, and primary Shirasu in the Kyshu region. The hollow particles are manufactured from natural materials. Therefore, the hollow particles and the ground hollow particles place little burden on the environment and operators.

The thickener is, for example, xanthan gum which is a natural thickening polysaccharide, or a cellulose derivative such as hydroxy propyl methyl cellulose or methyl cellulose. However, the thickener is not limited to the above examples, and may be any conventional thickener. When a thickener for food additives or cosmetic products is used, the burden placed by the thickener of the abrasive on the environment and operators is small.
When a worker polishes a surface to be polished of an object to be polished using a buff having the abrasive thereon, the hollow particles and the ground hollow particles in the abrasive move freely in a rolling motion between the buff and the surface to be polished. Further, a part of the hollow particles in the abrasive is ground to form ground hollow particles.

When the hollow particles roll over water scale attached to the surface to be polished, the water scale is scraped off the surface to be polished by the hollow particles.
When the ground hollow particles roll over an oil film attached to the surface to be polished, the edges of the ground hollow particles cut into the oil film so that the oil film is scraped off the surface to be polished by the ground hollow particles.
The hollow particles and the ground hollow particles which roll between the buff and the surface to be polished are sometimes caught in stains and dirt and other extraneous substances on the surface to be polished. In such a case, if a worker continues the polishing operation using the buff, the hollow particles and the ground hollow particles that are caught in the stains and dirt and the like move in a direction of lower resistance, and are thereby released from the caught state and can freely move again. No unreasonable pressure is applied between the hollow particles or the ground hollow particles caught in the stains and dirt and the like and the surface to be polished. Therefore, the surface to be polished can be protected from scratches caused by the hollow particles and the ground hollow particles during polishing.

According to the experience of the inventor of the present invention obtained through a process of trial and error, when the abrasive includes hollow particles having a particle size of less than 10 µm, the hollow particles are too small. In that case, the surface area of the hollow particles is too small to contact with a surface to be polished, and the hollow particles cannot efficiently scrape off water scale from the surface to be polished. When the abrasive includes hollow particles having a particle size exceeding 100 µm, scratches having a size visible to the naked eye are easily formed on the surface to be polished. When the abrasive includes hollow particles having a still larger particle size that exceeds 320 µm, the hollow particles tend to merely run over water scale on the surface to be polished and cannot efficiently scrape off the water scale from the surface.

Therefore, in order to efficiently scrape off water scale from a surface to be polished with hollow particles in the abrasive without causing scratches of a size visible to the naked eye on the surface to be polished, the abrasive should include hollow particles having a particle size of 10 to 100 µm.
According to the experience of the inventor of the present invention, when the abrasive includes ground hollow particles having a particle size of less than 5 µm, the ground hollow particles are too small. In this case, the surface area of the ground hollow particles is too small to contact with a surface to be polished, and the ground hollow particles cannot efficiently scrape off oil film from the surface to be polished. When the abrasive includes ground hollow particles having a particle size exceeding 30 µm, scratches having a size visible to the naked eye are easily formed on the surface to be polished. When the abrasive includes ground hollow particles having a still larger particle size exceeding 200 µm, the edges of the ground hollow particles cannot easily cut into the oil film, and thus the ground hollow particles cannot efficiently scrape off the oil film from the surface to be polished. Also, when the abrasive includes ground hollow particles having a particle size exceeding 200 µm, large scratches are likely to be formed on the surface to be polished.

Therefore, in order to efficiently scrape off oil film from a surface to be polished with ground hollow particles in an abrasive without causing scratches which have a size visible to the naked eye on the surface to be polished, the abrasive should include ground hollow particles having a particle size of 5 to 30 µm.
The content of hollow particles and the content of ground hollow particles in the abrasive are adjusted depending on the condition and amount of the water scale and oil film attached to a surface to be polished. When water scale is strongly attached or a large amount of water scale is attached, the content of hollow particles is increased. When oil film is strongly attached or a large amount of oil film is attached, the content of ground hollow particles is increased.

If a worker temporarily interrupts a polishing operation and later resumes the operation, the interruption is not detrimental to the resumed operation. Even if the abrasive dries up during the interruption, the dried abrasive can be restored to its initial state by adding moisture. Therefore, the worker can resume the polishing operation without any trouble.
Also, according to the experience of the inventor of the present invention, when the buff or polishing object to which the abrasive is attached is rinsed with water after completing a polishing operation, the abrasive is easily washed out with the water. The washed out abrasive flows with the water without deposition. Therefore, the abrasive that is washed out with water is not deposited in drainage pipes, and does not block up the drainage pipes. As described above, since the hollow particles, the ground hollow particles, and the thickener in the abrasive place little burden on the environment, after a polishing operation is completed, the abrasive can be washed out with water into ordinary drainage facilities. This facilitates the rearrangement and cleaning after completing the polishing operation.

An abrasive an abrasive according to the invention set forth in claim 2 includes ground hollow particles which are obtained by grinding hollow particles of a fired and expanded volcanic glass; cerium oxide particles; a thickener; and water, and the included ground hollow particles have a particle size of 5 to 30 µm, and the included cerium oxide particles have a particle size of 0.5 to 5 µm.
According to the invention set forth in claim 2, the abrasive includes ground hollow particles, cerium oxide particles, a thickener, and water. The ground hollow particles and the cerium oxide particles are dispersed in the abrasive by means of the thickener.

The ground hollow particles can be obtained by grinding hollow particles of a fired and expanded volcanic glass. The ground hollow particles have edges at the surfaces thereof. The edges are formed in the grinding of the hollow particles.
The hollow particles prior to the grinding individually have a hollow portion therein. The hollow portion may be independent from the outside or may be in communication with the outside.
The volcanic glass as the raw material of the ground hollow particles is available from vitreous volcanic rock and vitreous pyroclastic material. The ground hollow particles are manufactured from natural materials, and thus the ground hollow particles place little burden on the environment and operators.

Cerium oxide is a natural mineral. The cerium oxide particles which are of a natural mineral place little burden on the environment and operators.
The thickener is, for example, xanthan gum which is a natural thickening polysaccharide, or a cellulose derivative such as hydroxy propyl methyl cellulose or methyl cellulose. However, the thickener is not limited to the above examples, and may be any conventional thickener. When a thickener for food additives or cosmetic products is used, the burden placed by the thickener of the abrasive on the environment and operators is small.

When a worker polishes a surface to be polished of an object to be polished using a buff having the abrasive thereon, the ground hollow particles and the cerium oxide particles in the abrasive move freely in a rolling motion between the buff and the surface to be polished.
When the ground hollow particles roll over an oil film attached to the surface to be polished, the edges of the ground hollow particles cut into the oil film so that the oil film is scraped off the surface to be polished by the ground hollow particles.
Cerium oxide has a hardness greater than that of glass. When cerium oxide particles roll over a surface to be polished, the particles polish any unevenness and scratches formed on the surface, which makes the surface smooth. When a glass surface, a porcelain enamel product surface, a tile surface and the like are polished to eliminate any unevenness and scratches formed thereon so that the surfaces become smooth, white turbidity and cloudiness of the surfaces are also eliminated. The rolling of cerium oxide particles on a metal surface makes the metal surface smooth and eliminates any cloudiness on the metal surface so that the metal surface is polished to a mirror finish.

The ground hollow particles and the cerium oxide particles which roll between the buff and the surface to be polished are sometimes caught in stains and dirt and other extraneous substances on the surface to be polished. In such a case, if a worker continues the polishing operation using the buff, the ground hollow particles and the cerium oxide particles caught by the stains and dirt and the like move in a direction of lower resistance, and are thereby released from the caught state and can freely move again. No unreasonable pressure is applied between the ground hollow particles or the cerium oxide particles and the surface to be polished. Therefore, the surface to be polished can be protected from scratches caused by the ground hollow particles and the cerium oxide particles in the abrasive.

According to the experience of the inventor of the present invention, in order to efficiently scrape off oil film from a surface to be polished with ground hollow particles in an abrasive without causing scratches of a size visible to the naked eye on the surface to be polished, the ground hollow particles in the abrasive should have a particle size of 5 to 30 µm.
According to the experience of the inventor of the present invention, when cerium oxide particles in an abrasive have a particle size of less than 0.5 µm, the cerium oxide particles are too small to efficiently polish any unevenness and scratches formed on a surface to be polished. When cerium oxide particles in an abrasive have a particle size exceeding 5 µm, the cerium oxide particles are too large to efficiently polish any unevenness and scratches formed on a surface to be polished.

Therefore, cerium oxide particles in an abrasive should have a particle size of 0.5 to 5 µm.
The content of the ground hollow particles and the content of the cerium oxide particles in an abrasive are adjusted depending on the condition and amount of oil film attached to the surface to be polished and the condition of white turbidity and cloudiness of the surface to be polished. When oil film is strongly attached or a large amount of oil film is attached, the content of the ground hollow particles is increased. When a surface to be polished is affected by considerable white turbidity or cloudiness, the content of the cerium oxide particles is increased.

If a worker temporarily interrupts a polishing operation and resumes the operation later, the interruption is not detrimental to the resumed operation. Even if the abrasive dries up during the interruption, the dried abrasive can be restored to its initial state by adding moisture. Therefore, the worker can resume the polishing operation without any trouble.
According to the experience of the inventor of the present invention, when the buff or polishing object to which the abrasive is attached is rinsed with water after completing a polishing operation, the abrasive is easily washed out with the water. The washed out abrasive flows with the water without deposition. Therefore, the abrasive that is washed out with water is not deposited in drainage pipes, and does not block up the drainage pipes. As described above, since the ground hollow particles, the cerium oxide particles, and the thickener in the abrasive place little burden on the environment, after a polishing operation is completed the abrasive can be washed off with water into ordinary drainage facilities. This facilitates the rearrangement and cleaning after completing the polishing operation.

An abrasive according to the invention set forth in claim 3 includes hollow particles which are obtained by firing and expanding a volcanic glass; cerium oxide particles; a thickener; and water, and the included hollow particles have a particle size of 10 to 100 µm, and the included cerium oxide particles have a particle size of 0.5 to 5 µm.
According to the invention set forth in claim 3, the abrasive includes hollow particles, cerium oxide particles, a thickener, and water. The hollow particles and the cerium oxide particles are dispersed in the abrasive by means of the thickener.

The hollow particles are made of a fired and expanded volcanic glass, and individually have a hollow portion therein. The hollow portions of the hollow particles may be independent from the outside or may be in communication with the outside.
The volcanic glass as the raw material of the hollow particles is available from vitreous volcanic rock and vitreous pyroclastic material. The hollow particles are manufactured from natural materials, and thus the hollow particles place little burden on the environment and operators.
Cerium oxide is a natural mineral. The cerium oxide particles which are of a natural mineral place little burden on the environment and operators.

The thickener is, for example, xanthan gum which is a natural thickening polysaccharide, or a cellulose derivative such as hydroxy propyl methyl cellulose or methyl cellulose. However, the thickener is not limited to the above examples, and may be any conventional thickener. When a thickener for food additives or cosmetic products is used, the burden placed by the thickener of the abrasive on the environment and operators is small.
When a worker polishes a surface to be polished of an object to be polished using a buff having the abrasive thereon, the hollow particles and the cerium oxide particles in the abrasive move freely in a rolling motion between the buff and the surface to be polished. Further, a part of the hollow particles in the abrasive is ground to form ground hollow particles which also move freely in a rolling motion between the buff and the surface to be polished.

When the hollow particles roll over water scale attached to the surface to be polished, the water scale is scraped off the surface to be polished by the hollow particles.
When the ground hollow particles which are produced by grinding of the hollow particles roll over an oil film attached to the surface to be polished, the edges of the ground hollow particles cut into the oil film so that the oil film is scraped off the surface to be polished by the ground hollow particles.
When the cerium oxide particles roll over the surface to be polished, the particles polish any unevenness and scratches formed on the surface, which makes the surface smooth. When a glass surface, a porcelain enamel product surface, a tile surface and the like are polished to eliminate any unevenness and scratches formed thereon so that the surfaces become smooth, white turbidity and cloudiness of the surfaces are also eliminated. The rolling of cerium oxide particles on a metal surface makes the metal surface smooth and eliminates cloudiness on the metal surface so that the metal surface is polished to a mirror finish.

The hollow particles, the ground hollow particles, or the cerium oxide particles which roll between the buff and the surface to be polished are sometimes caught in stains and dirt and other extraneous substances on the surface to be polished. In such a case, if a worker continues the polishing operation using the buff, the hollow particles, the ground hollow particles, or the cerium oxide particles caught by the stains and dirt and the like move in a direction of lower resistance, and are released from the caught state and can move freely again. No unreasonable pressure is applied between the hollow particles, the ground hollow particles or the cerium oxide particles caught in the stains and dirt and the like and the surface to be polished. Therefore, the surface to be polished can be protected from scratches caused by the hollow particles, the ground hollow particles, or the cerium oxide particles which are caught by the stains and dirt and the like.

According to the experience of the inventor of the present invention, in order to efficiently scrape off water scale from a surface to be polished with hollow particles in an abrasive without causing scratches of a size visible to the naked eye on the surface to be polished, the hollow particles in the abrasive should have a particle size of 10 to 100 µm.
According to the experience of the inventor of the present invention, in order to efficiently polish any unevenness and scratches formed on a surface to be polished with cerium oxide particles in an abrasive to make the surface to be polished smooth, the cerium oxide particles should have a particle size of 0.5 to 5 µm.

The content of the hollow particles and the content of the cerium oxide particles in an abrasive are adjusted respectively depending on the condition and amount of water scale attached to the surface to be polished and the condition of white turbidity and cloudiness of the surface to be polished. When water scale is strongly attached or a large amount of water scale is attached, the content of the hollow particles is increased. When a surface to be polished is affected by considerable white turbidity or cloudiness, the content of the cerium oxide particles is increased.
If a worker temporarily interrupts a polishing operation and resumes the operation later, the interruption is not detrimental to the resumed operation. Even if the abrasive dries up during the interruption, the dried abrasive can be restored to its initial state by adding moisture. Therefore, the worker can resume the polishing operation without any trouble.

According to the experience of the inventor of the present invention, when the object that is polished and the buff to which the abrasive is attached are rinsed with water after completing a polishing operation, the abrasive is easily washed out with the water. The washed out abrasive flows with the water without deposition. Therefore, the abrasive that is washed out with water is not deposited in drainage pipes, and does not block up the drainage pipes. As described above, since the hollow particles, the cerium oxide particles, and the thickener in the abrasive place little burden on the environment, after a polishing operation is completed the abrasive can be washed off with water into ordinary drainage facilities. This facilitates the rearrangement and cleaning after the polishing operation.

An abrasive according to the invention set forth in claim 4 includes hollow particles which are obtained by firing and expanding a volcanic glass; ground hollow particles which are obtained by grinding the hollow particles; cerium oxide particles; a thickener; and water, and the included hollow particles have a particle size of 10 to 100 µm, the included ground hollow particles have a particle size of 5 to 30 µm, and the included cerium oxide particles have a particle size of 0.5 to 5 µm.
According to the invention set forth in claim 4, the abrasive includes hollow particles, ground hollow particles, cerium oxide particles, a thickener, and water. The hollow particles, the ground hollow particles, and the cerium oxide particles are dispersed in the abrasive by means of the thickener.

The hollow particles are made of a fired and expanded volcanic glass, and individually have a hollow portion therein. The hollow portions of the hollow particles may be independent from the outside or may be in communication with the outside. The ground hollow particles which are obtained by grinding the hollow particles have edges at the surfaces thereof. The edges are formed in the grinding of the hollow particles.
The volcanic glass as the raw material of the hollow particles is available from vitreous volcanic rock and vitreous pyroclastic material. The hollow particles are manufactured from natural materials, and thus the hollow particles and the ground hollow particles place little burden on the environment and operators.

Cerium oxide is a natural mineral. The cerium oxide particles which are a natural mineral place little burden on the environment and operators.
The thickener is, for example, xanthan gum which is a natural thickening polysaccharide, or a cellulose derivative such as hydroxy propyl methyl cellulose or methyl cellulose. However, the thickener is not limited to the above examples, and may be any conventional thickener. When a thickener for food additives or cosmetic products is used, the burden placed by the thickener of the abrasive on the environment and operators is small.

When a worker polishes a surface to be polished of an object to be polished using a buff having the abrasive thereon, the hollow particles, the ground hollow particles, and the cerium oxide particles in the abrasive move freely in a rolling motion between the buff and the surface to be polished. Further, a part of the hollow particles in the abrasive is ground to form ground hollow particles.
When the hollow particles roll over water scale attached to the surface to be polished, the water scale is scraped off the surface to be polished by the hollow particles.
When the ground hollow particles roll over an oil film attached to the surface to be polished, the edges of the ground hollow particles cut into the oil film so that the oil film is scraped off the surface to be polished by the ground hollow particles.

When cerium oxide particles roll over a surface to be polished, the particles polish any unevenness and scratches formed on the surface, which makes the surface smooth. When a glass surface, a porcelain enamel product surface, a tile surface and the like are polished to eliminate any unevenness and scratches formed thereon so that the surfaces become smooth, white turbidity and cloudiness of the surfaces are also eliminated. The rolling of cerium oxide particles on a metal surface makes the metal surface smooth and eliminates cloudiness on the metal surface so that the metal surface is polished to a mirror finish.
The hollow particles, the ground hollow particles, and the cerium oxide particles which roll between the buff and the surface to be polished are sometimes caught in stains and dirt and other extraneous substances on the surface to be polished. In such a case, if a worker continues the polishing operation using the buff, the hollow particles, the ground hollow particles, and the cerium oxide particles caught in the stains and dirt and the like move in a direction of lower resistance, and are thereby released from the caught state and can move freely again. No unreasonable pressure is applied between the hollow particles, the ground hollow particles, or the cerium oxide particles caught in the stains and dirt and the like and the surface to be polished. Therefore, the surface to be polished can be protected from scratches caused by the hollow particles, the ground hollow particles, or the cerium oxide particles which are caught by the stains and dirt and the like.

According to the experience of the inventor of the present invention, in order to efficiently scrape off water scale from a surface to be polished with hollow particles in an abrasive without causing scratches of a size visible to the naked eye on the surface to be polished, the hollow particles in the abrasive should have a particle size of 10 to 100 µm.
According to the experience of the inventor of the present invention, in order to efficiently scrape off oil film from a surface to be polished with ground hollow particles in an abrasive without causing scratches of a size visible to the naked eye on the surface to be polished, the ground hollow particles in the abrasive should have a particle size of 5 to 30 µm.

According to the experience of the inventor of the present invention, in order to efficiently polish any unevenness and scratches formed on a surface to be polished with cerium oxide particles in an abrasive to make the surface to be polished smooth, the cerium oxide particles should have a particle size of 0.5 to 5 µm.
The content of the hollow particles, the content of the ground hollow particles, and the content of the cerium oxide particles in an abrasive are adjusted respectively depending on the condition and amount of water scale and oil film attached to the surface to be polished and the condition of white turbidity and cloudiness of the surface to be polished.

If a worker temporarily interrupts a polishing operation and resumes the operation later, the interruption is not detrimental to the resumed operation. Even if the abrasive dries up during the interruption, the dried abrasive can be restored to its initial state by adding moisture. Therefore, the worker can resume the polishing operation without any trouble.
According to the experience of the inventor of the present invention, when the buff or the polishing object to which the abrasive is attached is rinsed with water after completing a polishing operation, the abrasive is easily washed out with the water. The washed out abrasive flows with the water without deposition. Therefore, the abrasive that is washed out with water is not deposited in drainage pipes, and does not block up the drainage pipes. As described above, since the hollow particles, the ground hollow particles, the cerium oxide particles, and the thickener in the abrasive place little burden on the environment, after a polishing operation is completed the abrasive can be washed off with water into ordinary drainage facilities. This facilitates the rearrangement and cleaning after the polishing operation.

An abrasive according to the invention set forth in claim 5 includes hollow particles which are obtained by firing and expanding a volcanic glass; a thickener; and water, and the included hollow particles have a particle size of 80 to 320 µm.
According to the invention set forth in claim 5, the abrasive includes hollow particles, a thickener and water. The hollow particles are dispersed in the abrasive by means of the thickener.
The hollow particles are made of a fired and expanded volcanic glass, and individually have a hollow portion therein. The hollow portions of the hollow particles may be independent from the outside or may be in communication with the outside.

The volcanic glass as the raw material of the hollow particles is available from vitreous volcanic rock and vitreous pyroclastic material. The hollow particles are manufactured from natural materials, and thus the hollow particles place little burden on the environment and operators.
The thickener is, for example, xanthan gum which is a natural thickening polysaccharide, or a cellulose derivative such as hydroxy propyl methyl cellulose or methyl cellulose. However, the thickener is not limited to the above examples, and may be any conventional thickener. When a thickener for food additives or cosmetic products is used, the burden placed by the thickener of the abrasive on the environment and operators is small.

When a worker polishes a surface to be polished of an object to be polished using a buff having the abrasive thereon, the hollow particles in the abrasive move freely in a rolling motion between the buff and the surface to be polished.
The pressure applied by the worker to the buff causes a part of the hollow particles in the abrasive to be ground to form ground hollow particles. The ground hollow particles also move freely in a rolling motion between the buff and the surface to be polished. Most of the crushed pieces of hollow particles which are produced from the hollow particles having a particle size of 80 to 320 µm have a particle size of 200 µm or less, and at least a part of the crushed pieces of hollow particles have a particle size of 50 to 200 µm.

The hollow particles and the ground hollow particles which roll between the buff and the surface to be polished are sometimes caught in stains and dirt and other extraneous substances on the surface to be polished. In such a case, if a worker continues the polishing operation using the buff, the hollow particles and the ground hollow particles caught in the stains and dirt and the like move in a direction of lower resistance, and are released from the caught state and can move freely again. No unreasonable pressure is applied between the hollow particles or the ground hollow particles and the surface to be polished. Therefore, the surface to be polished can be protected from severe scratches caused by the hollow particles and the ground hollow particles.

Generally, a floor surface has various stains and dirt such as water scale and oil film attached thereto together with old wax. In many cases, the old wax includes the stains and dirt therein and solidifies them.
According to the experience of the inventor of the present invention obtained through a process of trial and error, when a surface to be polished of an object to be polished is a floor surface and an abrasive includes hollow particles having a particle size of less than 80 µm, the hollow particles in the abrasive cannot efficiently scrape off stains and dirt such as water scale attached to the floor surface. Also, when an abrasive includes hollow particles having a particle size exceeding 320 µm, the hollow particles in the abrasive cannot efficiently scrape off stains and dirt such as water scale attached to the floor surface. Further, when an abrasive includes hollow particles having a particle size exceeding 320 µm, the hollow particles in the abrasive and crushed pieces of hollow particles which are produced from the hollow particles may cause visible scratches on the floor surface.

When a surface to be polished of an object to be polished is a floor surface and an abrasive includes ground hollow particles having a particle size of less than 50 µm, the ground hollow particles cannot efficiently scrape off stains and dirt such as oil film and old wax attached to the floor surface. Also, when an abrasive includes ground hollow particles having a particle size exceeding 200 µm, the ground hollow particles cannot efficiently scrape off stains and dirt such as oil film and old wax attached to the floor surface. Furthermore, when an abrasive includes ground hollow particles having a particle size exceeding 200 µm, the ground hollow particles may cause visible scratches on the floor surface.

According to the experience of the inventor of the present invention obtained through a process of trial and error, when a surface to be polished of an object to be polished is a floor surface and an abrasive includes hollow particles having a particle size of 80 to 320 µm, the hollow particles in the abrasive can efficiently scrape off stains and dirt such as water scale attached to the floor surface, and cause fine scratches on the floor surface. Also, when an abrasive includes ground hollow particles having a particle size of 50 to 200 µm, the ground hollow particles in the abrasive can efficiently scrape off stains and dirt such as oil film and old wax attached to the floor surface, and cause fine scratches on the floor surface.

After various stains and dirt such as water scale and oil film are removed from a floor surface together with old wax, and a new coat of wax is applied to the floor surface with fine scratches formed thereon, the new wax is spread on the floor in a favorable condition due to the existence of the fine scratches. After the new coat of wax is applied, the fine scratches formed on the floor surface are buried under the wax and become invisible.
Therefore, in order to efficiently remove various stains and dirt such as water scale and oil film from a floor surface together with old wax, make the floor surface easy to wax, and obtain a shiny floor, an abrasive should include hollow particles having a particle size of 80 to 320 µm.

The content of the hollow particles in an abrasive is adjusted depending on the condition and amount of stains, dirt and old wax attached to the surface to be polished. When stains and dirt are strongly attached, a large amount of stains and dirt is attached, old wax is strongly attached, or a large amount of old wax is attached, the content of the hollow particles in the abrasive is increased.
If a worker temporarily interrupts a polishing operation to remove stains, dirt and old wax using the abrasive, and resumes the operation later, the interruption is not detrimental to the resumed operation. Even if the abrasive dries up during the interruption, the dried abrasive can be restored to its initial state by adding moisture. Therefore, the worker can resume the polishing operation without any trouble. That is, a floor cleaning operation can be temporarily interrupted as needed. This facilitates planning of the floor cleaning operation and improvement in the efficiency of the cleaning operation.

According to the experience of the inventor of the present invention, after a polishing operation is completed, when the polished surface of the polished object is washed with water, the abrasive is washed out with the water without deposition and there is no deposition of the abrasive in pipes of drainage facilities. Since the abrasive includes hollow particles, ground hollow particles, and a thickener which place little burden on the environment, after a polishing operation is completed the abrasive can be washed off with water into ordinary drainage facilities. This facilitates the rearrangement and cleaning after the polishing operation.
In addition, the hollow particles, ground hollow particles, and thickener included in the abrasive do not change the quality or color of a floor such as a rock floor, wood floor, synthetic resin floor, linoleum floor, brick floor, and metal floor. Therefore, a worker does not have to care about the material of a floor before he starts an operation to clean the floor, and can thus efficiently carry out the floor cleaning operation. It is to be understood that the above floor materials are listed as examples, and a floor material to which the abrasive may be applied is not limited to the above

### examples.

An abrasive according to the invention set forth in claim 6 includes ground hollow particles which are obtained by grinding hollow particles of a fired and expanded volcanic glass; a thickener; and water, and the included ground hollow particles have a particle size of 50 to 200 µm.
According to the invention set forth in claim 6, the abrasive includes ground hollow particles, a thickener, and water. The ground hollow particles are dispersed in the abrasive by means of the thickener.
The ground hollow particles can be obtained by grinding hollow particles of a fired and expanded volcanic glass. The ground hollow particles have edges at the surfaces thereof. The edges are formed in the grinding of the hollow particles. The hollow particles prior to the grinding individually have a hollow portion therein. The hollow portion may be independent from the outside or may be in communication with the outside.

The volcanic glass as the raw material of ground hollow particles is available from vitreous volcanic rock and vitreous pyroclastic material. The ground hollow particles are manufactured from natural materials, and thus the ground hollow particles place little burden on the environment and operators.
The thickener is, for example, xanthan gum which is a natural thickening polysaccharide or a cellulose derivative such as hydroxy propyl methyl cellulose or methyl cellulose. However, the thickener is not limited to the above examples, and may be any conventional thickener. When a thickener for food additives or cosmetic products is used, the burden placed by the thickener of the abrasive on the environment and operators is small.

When a worker polishes a surface to be polished of an object to be polished using a buff having the abrasive thereon, the ground hollow particles in the abrasive move freely in a rolling motion between the buff and the surface to be polished.
The ground hollow particles which roll between the buff and the surface to be polished are sometimes caught in stains and dirt and other extraneous substances on the surface to be polished. In such a case, if the worker continues the polishing operation using the buff, the ground hollow particles caught in the stains and dirt move in a direction of lower resistance, and are thereby released from the caught state and can move freely again. No unreasonable pressure is applied between the ground hollow particles and the surface to be polished. Therefore, the surface to be polished can be protected from severe scratches caused by the ground hollow particles.

Generally, a floor surface has various stains and dirt such as water scale and oil film strongly attached thereto together with old wax. In many cases, the old wax includes the stains and dirt therein and solidifies them.
According to the experience of the inventor of the present invention obtained through a process of trial and error, when a surface to be polished of an object to be polished is a floor surface and an abrasive includes ground hollow particles having a particle size of 50 to 200 µm, the ground hollow particles in the abrasive can efficiently scrape off stains and dirt such as oil film and old wax that are attached to the floor surface, and cause fine scratches on the floor surface.

After various stains and dirt such as oil film are removed from a floor surface together with old wax, and a new coat of wax is applied to the floor surface which has fine scratches formed thereon, the new wax is spread on the floor in a favorable condition due to the existence of the fine scratches. After the new coat of wax is applied, the fine scratches formed on the floor surface are buried under the wax and become completely invisible.
Therefore, in order to efficiently remove various stains and dirt such as oil film from a floor surface together with old wax, make the floor surface easy to wax, and obtain a shiny floor, an abrasive should include ground hollow particles having a particle size of 50 to 200 µm.

The content of the ground hollow particles in the abrasive is adjusted depending on the condition and amount of stains and dirt such as oil film and old wax attached to the surface to be polished. When stains and dirt such as oil film are strongly attached, a large amount of stains and dirt such as oil film is attached, old wax is strongly attached, or a large amount of old wax is attached, the content of the ground hollow particles in the abrasive is increased.
If a worker temporarily interrupts a polishing operation to remove stains and dirt and old wax from a floor surface using the abrasive, and resumes the operation later, the interruption is not detrimental to the resumed operation. Even if the abrasive dries up during the interruption, the dried abrasive can be restored to its initial state by adding moisture. Therefore, the worker can resume the polishing operation without any trouble. That is, a floor cleaning operation can be temporarily interrupted as needed. This facilitates planning of the floor cleaning operation and improvement in the efficiency of the cleaning operation.

According to the experience of the inventor of the present invention, after a polishing operation is completed, when the polished surface of the polished object is washed with water, the abrasive is washed out together with the water without deposition, and there is no deposition of the abrasive in pipes of drainage facilities. Since the abrasive includes ground hollow particles and a thickener which place little burden on the environment, after a polishing operation is completed the abrasive can be washed off with water into ordinary drainage facilities. This facilitates the rearrangement and cleaning after the polishing operation.
In addition, the ground hollow particles and thickener included in the abrasive do not change the quality or color of a floor such as a rock floor, wood floor, synthetic resin floor, linoleum floor, brick floor, and metal floor. Therefore, a worker does not have to care about the floor material before he starts an operation to clean the floor, and can thus efficiently carry out the floor cleaning operation. It is to be understood that the above floor materials are listed as examples, and a floor material to which the abrasive may be applied is not limited to the above examples.

An abrasive according to the invention set forth in claim 7 includes hollow particles which are obtained by firing and expanding a volcanic glass; ground hollow particles which are obtained by grinding the hollow particles; a thickener; and water, and the included hollow particles have a particle size of 80 to 320 µm, and the included ground hollow particles have a particle size of 50 to 200 µm.
According to the invention set forth in claim 7, the abrasive includes hollow particles, ground hollow particles, a thickener, and water. The hollow particles and the ground hollow particles are dispersed in the abrasive by means of the thickener.

The hollow particles are made of a fired and expanded volcanic glass, and individually have a hollow portion therein. The hollow portion of the hollow particles may be independent from the outside or may be in communication with the outside. The ground hollow particles which can be obtained by grinding the hollow particles have edges at the surfaces thereof. The edges are formed in the grinding of the hollow particles.
The volcanic glass as the raw material of the hollow particles is available from vitreous volcanic rock and vitreous pyroclastic material. The hollow particles are manufactured from natural materials, and thus the hollow particles and the ground hollow particles place little burden on the environment and operators.

The thickener is, for example, xanthan gum which is a natural thickening polysaccharide, or a cellulose derivative such as hydroxy propyl methyl cellulose or methyl cellulose. However, the thickener is not limited to the above examples, and may be any conventional thickener. When a thickener for food additives or cosmetic products is used, the burden placed by the thickener of the abrasive on the environment and operators is small.
When a worker polishes a surface to be polished of an object to be polished using a buff having the abrasive thereon, the hollow particles and the ground hollow particles in the abrasive move freely in a rolling motion between the buff and the surface to be polished.

The pressure applied by the worker to the buff causes the hollow particles in the abrasive to be ground to form ground hollow particles. Most of the crushed pieces of hollow particles which are produced from the hollow particles having a particle size of 80 to 320 µm have a particle size of 200 µm or less, and at least a part of the crushed pieces of hollow particles have a particle size of 50 to 200 µm.
The hollow particles and the ground hollow particles which roll between the buff and the surface to be polished are sometimes caught in stains and dirt and other extraneous substances on the surface to be polished. In such a case, if the worker continues the polishing operation using the buff, the hollow particles and the ground hollow particles caught in the stains and dirt and the like move in a direction of lower resistance, and are thereby released from the caught state and can move freely again. No unreasonable pressure is applied between the hollow particles or the ground hollow particles and the surface to be polished. Therefore, the surface to be polished can be protected from severe scratches caused by the hollow particles and the ground hollow particles.

Generally, a floor surface has various stains and dirt such as water scale and oil film strongly attached thereto together with old wax. In many cases, the old wax includes the stains and dirt therein and solidifies them.
According to the experience of the inventor of the present invention obtained through a process of trial and error, when a surface to be polished of an object to be polished is a floor surface and an abrasive includes hollow particles having a particle size of 80 to 320 µm, the hollow particles in the abrasive can efficiently scrape off stains and dirt such as water scale attached to the floor surface, and cause fine scratches on the floor surface. Also, when an abrasive includes ground hollow particles having a particle size of 50 to 200 µm, the ground hollow particles in the abrasive can efficiently scrape off stains and dirt such as oil film and old wax attached to the floor surface, and cause fine scratches on the floor surface.

After various stains and dirt such as water scale and oil film are removed from a floor surface together with old wax, and a new coat of wax is applied to the floor surface which has fine scratches formed thereon, the wax is spread on the floor in a favorable condition due to the existence of the fine scratches. After the new coat of wax is applied, the fine scratches formed on the floor surface are buried under the wax and become invisible.
Therefore, in order to efficiently remove various stains and dirt such as water scale and oil film from a floor surface together with old wax, make the floor surface easy to wax, and obtain a shiny floor, the abrasive should include hollow particles having a particle size of 80 to 320 µm, and the abrasive should include ground hollow particles having a particle size of 50 to 80 µm.

The content of hollow particles and the content of ground hollow particles in an abrasive is adjusted depending on the condition and amount of stains and dirt such as water scale and oil film and old wax attached to the surface to be polished. When stains and dirt are strongly attached, a large amount of stains and dirt is attached, old wax is strongly attached, or a large amount of old wax is attached, the content of the ground hollow particles or the content of the ground hollow particles is increased.
If a worker temporarily interrupts a polishing operation to remove stains, dirt and old wax from a floor surface using the abrasive, and resumes the operation later, the interruption is not detrimental to the resumed operation. Even if the abrasive dries up during the interruption, the dried abrasive can be restored to its initial state by adding moisture. Therefore, the worker can resume the polishing operation without any trouble. That is, a floor cleaning operation can be temporarily interrupted as needed. This facilitates planning of the floor cleaning operation and improvement in the efficiency of the cleaning operation.

According to the experience of the inventor of the present invention, after a polishing operation is completed, when the polished surface of the polished object is washed with water, the abrasive is washed out with the water without deposition and there is no deposition of the abrasive in pipes of drainage facilities. As described above, since the abrasive includes hollow particles, ground hollow particles and a thickener which place little burden on the environment, after a polishing operation is completed the abrasive can be washed off with water into ordinary drainage facilities. This facilitates the rearrangement and cleaning after the polishing operation.
In addition, the hollow particles, ground hollow particles and thickener included in the abrasive do not change the quality or color of a floor such as a rock floor, wood floor, synthetic resin floor, linoleum floor, brick floor, and metal floor. Therefore, a worker does not have to care about the floor material before he starts a floor cleaning operation, and can thus efficiently carry out the floor cleaning operation. It is to be understood that the above floor materials are listed as examples, and a floor material to which the abrasive may be applied is not limited to the above

### examples.

An abrasive according to the invention set forth in claim 8 is an abrasive according to any one of claims 1 to 7, and the hollow particles are Shirasu balloons.
Shirasu balloons are obtained by firing and expanding a vitreous pyroclastic material at a high temperature.
An abrasive according to the invention set forth in claim 9 is an abrasive according to any one of claims 1 to 7, and the hollow particles are perlite.

Perlite (expanded perlite) is obtained by firing and expanding a vitreous volcanic rock such as crude perlite, obsidian, and pitchstone at a high temperature. Including the description of claim 9, the term "perlite" as used herein refers to a material which is obtained by firing and expanding a vitreous volcanic rock at a high temperature, and does not refer to crude perlite.
The above described abrasive has excellent workability and safety, and is capable of efficiently removing stains and dirt attached to the surface of articles such as glass products, porcelain enamel products, tile products, metal products, and the like, or to the surface of a floor such as a rock floor, wood floor, synthetic resin floor, linoleum floor, brick floor, and the like.

### Brief Description of the Drawings

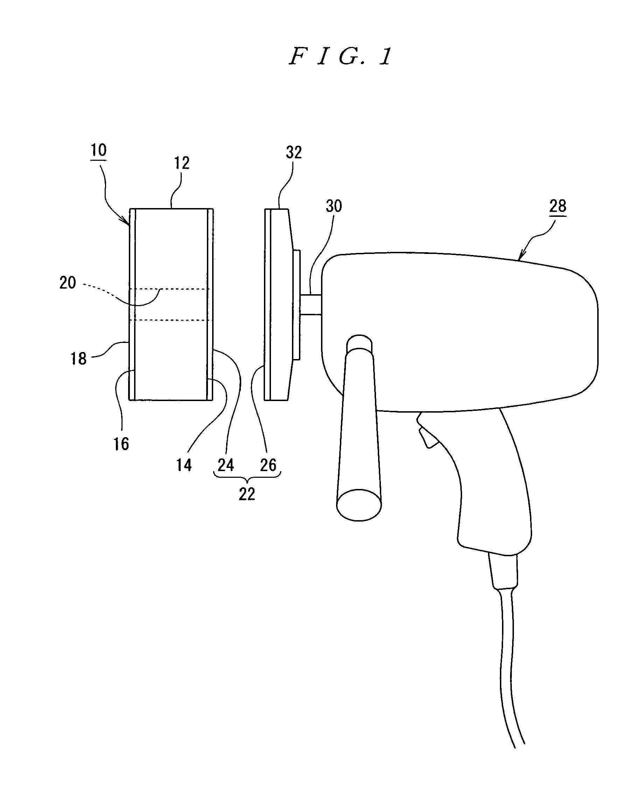

Figure 1 is an outline view of a polishing buff.

### Description of Symbols

- 10: polishing buff
- 12: support
- 14, 16: circular end surface
- 18: nonwoven fabric
- 20: hole
- 22: fastener
- 24, 26: strip
- 28: rotary tool
- 30: rotation shaft
- 32: buff mount

### Best Mode for Carrying Out the Invention

A first embodiment for practicing the present invention is described below.
First, an abrasive according to the first embodiment is described.
The abrasive according to the first embodiment includes hollow particles, ground hollow particles obtained by grinding the hollow particles, cerium oxide particles, a thickener, and water.
The hollow particles are Shirasu balloons or perlite. Shirasu balloons can be obtained by firing a vitreous pyroclastic material at a temperature of, for example, 1000 to 1200 degrees C to expand the material. Perlite can be obtained by preheating vitreous volcanic rock at a temperature of, for example, 200 to 500 degrees C, and then heating the preheated vitreous volcanic rock rapidly for expansion at a temperature of 900 to 1100 degrees C. The hollow portions of the hollow particles may be independent from the outside or may be in communication with the outside. The hollow particles have a particle size of 10 to 100 µm.

The ground hollow particles can be obtained by grinding Shirasu balloons or perlite. The ground hollow particles have edges at the surfaces thereof. The edges are formed in the grinding of Shirasu balloons or perlite. The ground hollow particles have a particle size of 5 to 30 µm.
The cerium oxide particles can be obtained by grinding naturally produced cerium oxide. The cerium oxide particles have a particle size of 0.5 to 5 µm.
The thickener is xanthan gum which is a natural thickening polysaccharide.

When the hollow particles are Shirasu balloons, the ground hollow particles may be those obtained by grinding Shirasu balloons or those obtained by grinding perlite. When the hollow particles are made of perlite, the ground hollow particles may be those obtained by grinding Shirasu balloons or those obtained by grinding perlite.
The procedure for preparing an abrasive according to the first embodiment is described below.
First, a worker dissolves a thickener in water. After the thickener is dissolved in water, the worker adds hollow particles and ground hollow particles to the solution, and agitates the mixture. The agitation is desirably continued by the worker until lumps of the hollow particles and the ground hollow particles disappear and the hollow particles and the ground hollow particles are discretely dispersed in the water.

Then, the worker pours cerium oxide particles into separately prepared water to agitate. The agitation is desirably continued by the worker until lumps of cerium oxide disappear and the cerium oxide particles are discretely dispersed in the water.
The worker adds the water having the dispersed cerium oxide particles into the water having the dispersed hollow particles and ground hollow particles to agitate. The agitation is desirably continued by the worker until the hollow particles, the ground hollow particles, and the cerium oxide particles are discretely dispersed and suspended in the water. After sufficient agitation of the mixture, an abrasive according to the first embodiment is prepared.

In the abrasive according to the first embodiment, the hollow particles, the ground hollow particles, and the cerium oxide particles are discretely dispersed in water, and the thickener maintains the dispersed state. Thus, separation of the prepared abrasive according to the first embodiment is prevented.
Next, a polishing buff which is used to polish a surface to be polished of an object to be polished will be described.
As shown in Figure 1, a polishing buff 10 includes a support 12 and a nonwoven fabric 18.
The support 12 is formed of a resilient member. The resilient member is urethane sponge. The support 12 has a cylindrical shape, and has a strip 24 adhered to one of the circular end surfaces 14 of the support 12. The strip 24 forms a part of a fastener 22, and has a number of small loops.

A nonwoven fabric 18 covers the other circular end surface 16 of the support 12. A hole 20 is formed centrally of the nonwoven fabric 18 covering the circular end surface 16. The hole 20 is through the nonwoven fabric 18, the support 12, and the strip 24 between the circular end surface 16 and the circular end surface 14.
The nonwoven fabric 18 is one of, for example, resin bonded nonwoven fabric, thermally bonded nonwoven fabric, spunlace nonwoven fabric, needle punched nonwoven fabric, air laid nonwoven fabric, spunbonded nonwoven fabric, meltblown nonwoven fabric, and wet laid nonwoven fabric. The nonwoven fabric 18 may be other nonwoven fabric other than the above listed fabrics.

A rotary tool 28 has a rotation shaft 30. The rotary tool 28 is configured to rotate the rotation shaft 30 by an electrical driving or an air driving. The rotation shaft 30 has a disc-like buff mount 32 mounted to the tip portion thereof. A strip 26 is adhered to the buff mount 32. The strip 26 forms a part of the fastener 22, and has a number of small hooks. The hooks of the strip 26 are engaged with the loops of the strip 24 to adhere the strip 26 to the strip 24 so that the polishing buff 10 is mounted to the tip portion of the rotation shaft 30.

Next, the operation is described.
In this case, an object to be polished is a windowpane of a bus, and a worker polishes the surface to be polished of the object to be polished using an abrasive according to the first embodiment and the polishing buff 10.
The surface to be polished of the object to be polished is uneven. The unevenness is formed as a result of chemical cleaning of the object to be polished using hydrogen fluoride. The unevenness causes white turbidity on the surface to be polished. An oil film and water scale are also strongly adhered to the surface to be polished. The oil film and water scale cause low visibility and glare with respect to the windowpane that is the object to be polished, which detracts from the aesthetic appearance of the object to be polished.

First, the worker covers the peripheral portion of the object to be polished of the bus body with a plastic sheet for protection. The protection prevents the attachment of stains and dirt and the forming of scratches on the bus body during the polishing operation of the surface to be polished. Even if the abrasive according to the first embodiment is attached to a portion other than the object to be polished of the bus body which is not protected by the plastic sheet, the quality of the portion to which the abrasive according to the first embodiment is attached is not changed, and the attached abrasive according to the first embodiment can be easily washed off with water.

After protecting the bus body, the worker washes the surface to be polished to wash off iron powders and the like attached to the surface to be polished. The washing off of iron powders and the like from the surface to be polished in advance prevents the formation of scratches on the surface to be polished by iron powders.
The worker installs the polishing buff 10 to the buff mount 32 at the tip portion of the rotation shaft 30 of the rotary tool 28. The polishing buff 10 is secured to the buff mount 32 by the fastener 22.
After installing the polishing buff 10 to the rotary tool 28, the worker checks the nonwoven fabric 18 of the polishing buff 10. If the worker finds any stains or dirt or other extraneous substances attached to the nonwoven fabric 18, the worker washes the polishing buff 10 with water to remove the stains or dirt or other extraneous substances from the nonwoven fabric 18. The worker thus prevents any stains or dirt or other extraneous substances that are attached to the nonwoven fabric 18 from dirtying or scratching the surface to be polished.

Next, the worker pours the abrasive according to the first embodiment into the nonwoven fabric 18 of the polishing buff 10.
The worker causes the rotation shaft 30 of the rotary tool 28 to rotate so that the polishing buff 10 rotates with the rotation shaft 30. Then, the worker presses the rotating nonwoven fabric 18 of the polishing buff 10 against the surface to be polished. The rotating nonwoven fabric 18 of the polishing buff 10 functions as a polishing surface, and polishes the surface to be polished.
Between the surface to be polished and the rotating nonwoven fabric 18, the hollow particles, the ground hollow particles and the cerium oxide particles in the abrasive according to the first embodiment roll and move freely. The hollow particles in the abrasive according to the first embodiment roll over the water scale attached to the surface to be polished, thereby scraping off the water scale from the surface to be polished. The ground hollow particles in the abrasive according to the first embodiment roll over the oil film attached to the surface to be polished, whereby the edges of the ground hollow particles cut into the oil film to scrape off the oil film from the surface to be polished. The cerium oxide particles in the abrasive according to the first embodiment roll over the unevenness of the surface to be polished, which causes the unevenness of the surface to be polished to be polished by the cerium oxide particles to make the surface to be polished smooth.

Since the support 12 of the polishing buff 10 is a resilient member, the polishing buff 10 can readily conform to the shape of a surface to be polished. Therefore, the nonwoven fabric 18 is capable of contact with a surface to be polished of any shape. The entire surface to be polished is polished by the abrasive according to the first embodiment.
In some cases, the hollow particles, the ground hollow particles, and the cerium oxide particles which move freely in a rolling motion between a surface to be polished and the nonwoven fabric 18 are caught in water scale and oil film attached to the surface to be polished or unevenness on the surface to be polished. Even if the hollow particles and the like are caught in the water scale and the like, the worker continues the polishing operation with the polishing buff 10 being rotated. The caught hollow particles and the like move in a direction of lower resistance, and are released from the caught state. No unreasonable pressure is applied from the caught hollow particles and the like to the surface to be polished, and also no scratches are formed by the caught hollow particles and the like on the surface to be polished.

While the worker continues polishing the surface to be polished, the water scale and oil film which are scraped off from the surface to be polished, the hollow particles, the ground hollow particles, the cerium oxide particles, the thickener and the like included in the abrasive according to the first embodiment form an abrasive residue. A part of the abrasive residue moves to the outer periphery of the rotating nonwoven fabric 18, and is discharged from between the surface to be polished and the nonwoven fabric 18. The remaining abrasive residue moves toward the center of the rotating nonwoven fabric 18, and enters into the hole 20 disposed centrally of the nonwoven fabric 18 to be discharged from between the surface to be polished and the nonwoven fabric 18. The discharge of the abrasive residue from between the surface to be polished and the nonwoven fabric 18 prevents any formation of scratches on the surface to be polished by the abrasive residue.

The discharge of the abrasive residue from between the surface to be polished and the nonwoven fabric 18 also reduces the amount of the abrasive residue scattered from the polishing surface, which reduces the amount of stains and dirt that attach to the periphery of the polishing surface. Therefore, the rearrangement and cleaning is easy after the polishing operation is completed, and only a small surface area has to be protected before the polishing operation.
As the worker continues polishing the surface to be polished, the surface to be polish gets dry. When the surface to be polished dries up and the amount of moisture between the surface to be polished and the polishing buff 10 decreases, the hollow particles, the ground hollow particles, and the cerium oxide particles cannot freely roll. When the hollow particles, the ground hollow particles, and the cerium oxide particles which cannot freely roll get caught in stains and dirt, the particles can no longer move. At this time, an unreasonable pressure is applied to the surface to be polished by the hollow particles and the like, which cause scratches on the surface to be polished.

Thus, the worker supplies moisture to the surface to be polished using a spray for example. A supply of moisture as needed allows the hollow particles, the ground hollow particles, and the cerium oxide particles in the abrasive according to the first embodiment to roll and move freely. Moreover, the supplied moisture cools down the area between the surface to be polished and the polishing buff 10.
The polishing buff 10 is mounted to the buff mount 32 by the fastener 22, and is easily removed. Therefore, replacement of the old polishing buff 10 with a new polishing buff 10 is easy.

All of the hollow particles, the ground hollow particles, and the cerium oxide particles in the abrasive according to the first embodiment are obtained from natural materials. Therefore, the hollow particles, the ground hollow particles, and the cerium oxide particles in the abrasive according to the first embodiment place little burden on the environment and operators. Also, xanthan gum that is the thickener included in the abrasive according to the first embodiment is a thickener used in food additives and cosmetic products. Therefore, the burden placed by the thickener of the abrasive according to the first embodiment on the environment and operators is small. Thus, the abrasive residue places little burden on the environment and operators.

The worker washes the surface to be polished with water after a polishing operation is completed. The abrasive according to the first embodiment and the abrasive residue are not deposited, but washed out with the water. There occurs no deposition of the abrasive in the pipes of drainage facilities. As described above, since the hollow particles, the ground hollow particles, the cerium oxide particles, and the thickener in the abrasive according to the first embodiment place little burden on the environment, after a polishing operation is completed the abrasive can be simply washed off with water into ordinary drainage facilities. This facilitates the rearrangement and cleaning after the polishing operation.

In the first embodiment, a worker mounts the polishing buff 10 to the buff mount 32, and causes the polishing buff 10 to be rotated by the rotary tool 28. Naturally, instead of using the rotary tool 28, a worker may manually polish a surface to be polished using the polishing buff 10.
Next, a second embodiment for practicing the present invention is described.
First, an abrasive according to the second embodiment is described. The abrasive according to the second embodiment has the same composition as that of the abrasive according to the first embodiment except for the following points.

That is, the abrasive according to the second embodiment includes hollow particles, ground hollow particles which are obtained by grinding the hollow particles, a thickener, and water. The hollow particles are Shirasu balloons or perlite, and the hollow particles have a particle size of 80 to 320 µm. The ground hollow particles are obtained by grinding Shirasu balloons or perlite, and the ground hollow particles have a particle size of 50 to 200 µm.
The remaining composition of the abrasive according to the second embodiment is the same as that of the abrasive according to the first embodiment, which will not be described below.

The procedure for preparing the abrasive according to the second embodiment is described. The procedure for preparing the abrasive according to the second embodiment is the same as that for the abrasive according to the first embodiment except for the following points.
That is, a worker does not have to provide water with cerium oxide particles dispersed therein. Also, the worker does not have to add water in which cerium oxide particles are dispersed to the water in which hollow particles and ground hollow particles are dispersed.

The other procedures for preparing the abrasive according to the second embodiment are the same as those for the abrasive according to the first embodiment, which will not be described below.
Next, a polisher which is used to polish a surface to be polished of an object to be polished is described. The polisher is the same as a polisher which is conventionally used to polish a floor of a building, and is provided with a buff which rotates on a floor.
Next, the operation thereof is described.

The object to be polished is a floor of a building, and the surface to be polished is a floor surface. In this case, a worker uses the abrasive according to the second embodiment and the polisher to polish the surface to be polished of the object to be polished.
The floor surface which is the surface to be polished of the object to be polished is walked on by many passers-by wearing shoes. Therefore, various stains and dirt such as water scale and oil film, and old wax are strongly attached to the floor surface. The old wax contains a part of the stains and dirt therein, and solidifies them. The various stains and dirt such as water scale and oil film and the old wax darken the floor surface, which detracts from the aesthetic appearance of the building.

First, the worker determines an area in which a cleaning operation can be performed at one time, and covers the property around the area with a plastic sheet for protection. The protection prevents any attachment of stains and dirt and any forming of scratches on the property around the area during the floor polishing operation. Even if the abrasive according to the second embodiment attaches to the property around the area, the quality of the portion to which the abrasive is attached is not changed, and the attached abrasive can be easily washed off with water. The worker can also wipe off the attached abrasive using a wet cloth.

After protecting the surrounding equipment, the worker removes dust from the floor surface to undergo the cleaning operation, using a vacuum cleaner for example.
The worker spreads an appropriate amount of the abrasive according to the second embodiment on the floor surface to undergo the cleaning operation. The worker moves the polisher over the abrasive according to the second embodiment to rotate the buff of the polisher. The buff of the polisher functions as a polishing surface, and polishes the floor surface.

A part of the hollow particles of the abrasive according to the second embodiment is ground by the pressure applied from the buff of the polisher to form ground hollow particles. Most of the crushed pieces of the hollow particles which are produced from the hollow particles having a particle size of 80 to 320 µm have a particle size of 200 µm or less, and at least a part of the crushed pieces of the hollow particles has a particle size of 50 to 200 µm.
The hollow particles and the ground hollow particles in the abrasive according to the second embodiment move freely in a rolling motion between the buff of the polisher and the floor surface. The hollow particles roll over stains and dirt such as water scale attached to the floor surface, thereby scraping off the stains and dirt such as water scale from the surface to be polished. The ground hollow particles roll over the stains and dirt such as oil film and the old solidified wax attached to the floor surface, and the edges of the ground hollow particles cut into the stains and dirt such as oil film and the old solidified wax to thereby scrape off the stains and dirt such as oil film and the old solidified wax from the floor surface.

If there is a spot to which the polisher cannot reach in the area to undergo the cleaning operation, the worker uses the polishing buff 10 and the rotary tool 28 of the first embodiment to carry out the cleaning operation.
Even if the abrasive according to the second embodiment and the abrasive residue are attached to the floor surface, the moisture thereof quickly evaporates, and the abrasive according to the second embodiment and the abrasive residue dry up. Therefore, the abrasive according to the second embodiment and the abrasive residue do not make the floor notably slippery, which reduces the risk of the worker slipping and falling. If the abrasive according to the second embodiment has dried up, before using the polisher the worker supplies moisture using a spray for example to the spot to which the polisher is applied. Therefore, the dried abrasive according to the second embodiment does not cause any problem in a cleaning operation.

After a worker uses the abrasive according to the second embodiment and the polisher, and removes various stains and dirt such as water scale and oil film and old wax from a floor surface, a clean floor surface is exposed. The floor surface has many fine scratches formed by the rolling motion of the hollow particles and the ground hollow particles in the abrasive according to the second embodiment.
Then, the worker washes off the abrasive according to the second embodiment and the abrasive residue with water from the floor surface. Since the abrasive according to the second embodiment and the abrasive residue are washed off with water without deposition, there occurs no deposition of the abrasive in the pipes of drainage facilities. The hollow particles, the ground hollow particles, and thickener in the abrasive according to the second embodiment place little burden on the environment, and thus the abrasive according to the second embodiment and the abrasive residue can be washed off with water from the floor surface to ordinary drainage facilities.

After the abrasive according to the second embodiment and the abrasive residue are washed off the floor surface, a new coat of wax is applied to the floor surface. Due to the many fine scratches on the floor surface, the new wax is spread on the floor in a favorable condition. After the new coat of wax is applied, the fine scratches formed on the floor surface are buried under the wax, and become completely invisible.
As needed, a worker can interrupt an operation to remove stains and dirt on a floor surface using the abrasive according to the second embodiment and the polisher. If the operation is interrupted, the floor surface immediately dries up and is no longer slippery. Thus people can safely and easily pass through the area in which the operation is interrupted.

### (Examples)

The abrasive described in the first embodiment will be explained below by way of examples.

In Examples 1 to 48, the inventor of the present invention used the abrasive described in the first embodiment to carry out polishing operations on a surface to be polished of an object to be polished.
First, the abrasives, polishing buffs, and objects to be polished used in Examples 1 to 16 are shown in Table 1.

**[Table 1]**

| | Abrasive | | | Polishing Buff | | Object to Be Polished | Evaluation of Work Efficiency | Scratches on Polished Surface After Work |
|---|---|---|---|---|---|---|---|---|
| | Particle Size of Hollow Particles | Particle Size of Ground Hollow Particles | Particle Size of Cerium Oxide Particles | Configuration | Materials | | | |
| Example 1 | 90 µm | 15 µm | 3 µm | sponge | Sponge consists of 100% by mass of urethane. | Soft glass | E | Visible |
| Example 2 | 90 µm | 15 µm | 3 µm | sponge + woven fabric | Sponge consists of 100% by mass of urethane. Woven fabric consists of 100% by mass of cotton. | Soft glass | E | Visible |
| Example 3 | 90 µm | 15 µm | 3 µm | sponge + woven fabric | Sponge consists of 100% by mass of urethane. Woven fabric consists of 100% by mass of wool. | Soft glass | E | Visible |
| Example 4 | 90 µm | 15 µm | 3 µm | sponge + woven fabric | Sponge consists of 100% by mass of urethane. Woven fabric consists of 100% by mass of rayon. | Soft glass | E | Visible |
| Example 5 | 90 µm | 15 µm | 3 µm | sponge + woven fabric | Sponge consists of 100% by mass of urethane. Woven fabric consists of 75% by mass of polyester and the remaining portion of nylon. | Soft glass | E | Visible |
| Example 6 | 90 µm | 15 µm | 3 µm | sponge + woven fabric | Sponge consists of 100% by mass of urethane. Woven fabric consists of 100% by mass of polyester. | Soft glass | E | Visible |
| Example 7 | 90 µm | 15 µm | 3 µm | sponge + non-woven fabric | Sponge consists of 100% by mass of urethane. Non-woven fabric consists of 100% by mass of polyester. | Soft glass | E | Visible |
| Example 8 | 90 µm | 15 µm | 3 µm | sponge + non-woven fabric | Sponge consists of 100% by mass of urethane. Non-woven fabric consists of 75% by mass of polyester and the remaining portion of rayon. | Soft glass | E | Visible |
| Example 9 | 90 µm | 15 µm | 3 µm | sponge + non-woven fabric | Sponge consists of 100% by mass of urethane. Non-woven fabric consists of 65% by mass of polyester and the remaining portion of rayon. | Soft glass | A | None |
| Example 10 | 90 µm | 15 µm | 3 µm | sponge + non-woven fabric | Sponge consists of 100% by mass of urethane. Non-woven fabric consists of 60% by mass of polyester and the remaining portion of rayon. | Soft glass | A | None |
| Example 11 | 90 µm | 15 µm | 3 µm | sponge + non-woven fabric | Sponge consists of 100% by mass of urethane. Non-woven fabric consists of 55% by mass of polyester and the remaining portion of rayon. | Soft glass | A | None |
| Example 12 | 90 µm | 15 µm | 3 µm | sponge + non-woven fabric | Sponge consists of 100% by mass of urethane. Non-woven fabric consists of 50% by mass of polyester and the remaining portion of rayon. | Soft glass | B | None |
| Example 13 | 90 µm | 15 µm | 3 µm | sponge + non-woven fabric | Sponge consists of 100% by mass of urethane. Non-woven fabric consists of 30% by mass of polyester and the remaining portion of rayon. | Soft glass | B | None |
| Example 14 | 90 µm | 15 µm | 3 µm | sponge + non-woven fabric | Sponge consists of 100% by mass of urethane. Non-woven fabric consists of 100% by mass of nylon. | Soft glass | E | Visible |
| Example 15 | 90 µm | 15 µm | 3 µm | sponge + non-woven fabric | Sponge consists of 100% by mass of urethane. Non-woven fabric consists of 100% by mass of cotton (felt). | Soft glass | B | None |
| Example 16 | 90 µm | 15 µm | 3 µm | sponge + non-woven fabric | Sponge consists of 100% by mass of urethane. Non-woven fabric has a front surface treated by aluminium deposition. | Soft glass | E | Visible |

As shown in Table 1, each abrasive used in Examples 1 to 16 is the abrasive described in the first embodiment. Shirasu balloons which are the hollow particles have a particle size of 90 µm, the ground pieces of the Shirasu balloons which are the ground hollow particles have a particle size of 15 µm, and the cerium oxide particles have a particle size of 3 µm.
The polishing buff used in Example 1 is the polishing buff described in the first embodiment. However, the support has one circular end surface which is not covered with a nonwoven fabric. A urethane sponge which is the support is exposed at the circular end surface thereof, and the urethane sponge forms a polishing surface.

Each polishing buff used in Examples 2 to 6 is the polishing buff described in the first embodiment. However, the support has one circular end surface which is not covered with a nonwoven fabric. A woven fabric covers the circular end surface instead of a nonwoven fabric, and the woven fabric forms a polishing surface.
In Example 2, the material of the woven fabric which forms a polishing surface of the polishing buff consists of 100% cotton.
In Example 3, the material of the woven fabric which forms a polishing surface of the polishing buff consists of 100% wool.

In Example 4, the material of the woven fabric which forms a polishing surface of the polishing buff consists of 100% rayon.
In Example 5, the material of the woven fabric which forms a polishing surface of the polishing buff consists of 75% by mass of polyester and the remaining portion of nylon.
In Example 6, the material of the woven fabric which forms a polishing surface of the polishing buff consists of 100% polyester.

Each polishing buff used in Examples 7 to 16 is the polishing buff described in the first embodiment. However, the nonwoven fabric which forms a polishing surface is different in each example.
In Example 7, the material of the nonwoven fabric which forms a polishing surface of the polishing buff consists of 100% polyester.
In Example 8, the material of the nonwoven fabric which forms a polishing surface of the polishing buff consists of 75% by mass of polyester and the remaining portion is rayon.

In Example 9, the material of the nonwoven fabric which forms a polishing surface of the polishing buff consists of 65% by mass of polyester and the remaining portion is rayon.
In Example 10, the material of the nonwoven fabric which forms a polishing surface of the polishing buff consists of 60% by mass of polyester and the remaining portion is rayon.
In Example 11, the material of the nonwoven fabric which forms a polishing surface of the polishing buff consists of 55% by mass of polyester and the remaining portion is rayon.

In Example 12, the material of the nonwoven fabric which forms a polishing surface of the polishing buff consists of 50% by mass of polyester and the remaining portion is rayon.
In Example 13, the material of the nonwoven fabric which forms a polishing surface of the polishing buff consists of 30% by mass of polyester and the remaining portion is rayon.
In Example 14, the material of the nonwoven fabric which forms a polishing surface of the polishing buff consists of 100% nylon.

In Example 15, the material of the nonwoven fabric which forms a polishing surface of the polishing buff consists of felt of 100% cotton.
In Example 16, the nonwoven fabric which forms a polishing surface of the polishing buff has a surface treated by aluminium deposition.
Each object to be polished used in Examples 1 to 16 is made of a soft glass which is a float glass. Each object to be polished has a square surface to be polished of 500 mm x 500 mm. Oil film and scaly water scale are strongly adhered to each surface to be polished.

In Examples 1 to 16, the inventor of the present invention carried out a polishing operation on a surface to be polished by pouring the abrasive into each polishing buff, and causing each polishing buff to rotate using a rotary tool to press the rotating polishing buff against the surface to be polished of each object to be polished. Each rotary tool used in Examples 1 to 16 rotated at a speed of 1300 rpm. The results of the polishing operations in Examples 1 to 16 are shown in Table 1.
In Examples 1 to 16, each surface was checked for scratches after the polishing operation. The scratches were checked by observing each surface under sunlight with the naked eye.

Also, in Examples 1 to 16, the work efficiency of the polishing operation was evaluated using the following 5 grades of A, B, C, D, and E. The case where water scale and oil film were removed from the surface to be polished within five minutes was evaluated as grade A work efficiency. The case where water scale and oil film were removed from the surface to be polished within five to thirty minutes was evaluated as grade B work efficiency. The case where water scale and oil film were removed from the surface to be polished within thirty to sixty minutes was evaluated as grade C work efficiency. The case where sixty minutes or more was required to remove water scale and oil film from the surface to be polished was evaluated as grade D work efficiency. The case where a scratch visible to the naked eye under sunlight was formed on the surface to be polished was evaluated as grade E work efficiency.

That is, when an object to be polished is a soft glass, use of a polishing buff employed in an example demonstrating grade A work efficiency is most preferable, as it enables a quick and complete polishing operation. A polishing buff employed in an example demonstrating grade E work efficiency is not preferable, as it causes scratches on the surface to be polished.
As a result, Examples 9 to 11 without visible scratches on the surface to be polished were evaluated as grade A work efficiency. Examples 12, 13, and 15 without visible scratches on the surface to be polished were evaluated as grade B work efficiency. Examples 1 to 8, 14, and 16 with visible scratches on the surface to be polished were evaluated as grade E work efficiency.

In addition, in Example 13, the nonwoven fabric for the polishing surface of the polishing buff was torn, and the lifetime of the polishing buff was short.
Therefore, it was confirmed that when an object to be polished is made of a soft glass, the polishing buffs of Examples 9 to 11 are the most preferable. Also, it was confirmed that the polishing buffs of Examples 12, 13, and 15 enable a relatively quick and complete polishing operation. However, it was also confirmed that the polishing buff of Example 13 promotes the exhaustion of the polishing buff.

Next, the abrasives, polishing buffs, and objects to be polished used in Examples 17 to 32 are shown in Table 2.

**[Table 2]**

| | Abrasive | | | Polishing Buff | | Object to Be Polished | Evaluation of Work Efficiency | Scratches on Polished Surface After Work |
|---|---|---|---|---|---|---|---|---|
| | Particle Size of Hollow Particles | Particle Size of Ground Hollow Particles | Particle Size of Cerium Oxide Particles | Configuration | Materials | | | |
| Example 17 | 90 µm | 15 µm | 3 µm | sponge | Sponge consists of 100% by mass of urethane. | Tempered glass | D | None |
| Example 18 | 90 µm | 15 µm | 3 µm | sponge + woven fabric | Sponge consists of 100% by mass of urethane. Woven fabric consists of 100% by mass of cotton. | Tempered glass | C | None |
| Example 19 | 90 µm | 15 µm | 3 µm | sponge + woven fabric | Sponge consists of 100% by mass of urethane. Woven fabric consists of 100% by mass of wool. | Tempered glass | C | None |
| Example 20 | 90 µm | 15 µm | 3 µm | sponge + woven fabric | Sponge consists of 100% by mass of urethane. Woven fabric consists of 100% by mass of rayon. | Tempered glass | C | None |
| Example 21 | 90 µm | 15 µm | 3 µm | sponge + woven fabric | Sponge consists of 100% by mass of urethane. Woven fabric consists of 75% by mass of polyester and the remaining portion of nylon. | Tempered glass | C | None |
| Example 22 | 90 µm | 15 µm | 3 µm | sponge + woven fabric | Sponge consists of 100% by mass of urethane. Woven fabric consists of 100% by mass of polyester. | Tempered glass | C | None |
| Example 23 | 90 µm | 15 µm | 3 µm | sponge + non-woven fabric | Sponge consists of 100% by mass of urethane. Non-woven fabric consists of 100% by mass of polyester. | Tempered glass | C | None |
| Example 24 | 90 µm | 15 µm | 3 µm | sponge + non-woven fabric | Sponge consists of 100% by mass of urethane. Non-woven fabric consists of 75% by mass of polyester and the remaining portion of rayon. | Tempered glass | C | None |
| Example 25 | 90 µm | 15 µm | 3 µm | sponge + non-woven fabric | Sponge consists of 100% by mass of urethane. Non-woven fabric consists of 65% by mass of polyester and the remaining portion of rayon. | Tempered glass | C | None |
| Example 26 | 90 µm | 15 µm | 3 µm | sponge + non-woven fabric | Sponge consists of 100% by mass of urethane. Non-woven fabric consists of 60% by mass of polyester and the remaining portion of rayon. | Tempered glass | C | None |
| Example 27 | 90 µm | 15 µm | 3 µm | sponge + non-woven fabric | Sponge consists of 100% by mass of urethane. Non-woven fabric consists of 55% by mass of polyester and the remaining portion of rayon. | Tempered glass | C | None |
| Example 28 | 90 µm | 15 µm | 3 µm | sponge + non-woven fabric | Sponge consists of 100% by mass of urethane. Non-woven fabric consists of 50% by mass of polyester and the remaining portion of rayon. | Tempered glass | C | None |
| Example 29 | 90 µm | 15 µm | 3 µm | sponge + non-woven fabric | Sponge consists of 100% by mass of urethane. Non-woven fabric consists of 30% by mass of polyester and the remaining portion of rayon. | Tempered glass | C | None |
| Example 30 | 90 µm | 15 µm | 3 µm | sponge + non-woven fabric | Sponge consists of 100% by mass of urethane. Non-woven fabric consists of 100% by mass of nylon. | Tempered glass | A | None |
| Example 31 | 90 µm | 15 µm | 3 µm | sponge + non-woven fabric | Sponge consists of 100% by mass of urethane. Non-woven fabric consists of 100% by mass of cotton (felt). | Tempered glass | C | None |
| Example 32 | 90 µm | 15 µm | 3 µm | sponge + non-woven fabric | Sponge consists of 100% by mass of urethane. Non-woven fabric has a front surface treated by aluminium deposition. | Tempered glass | A | None |

As shown in Table 2, the abrasives of Examples 17 to 32 are the same as those of Examples 1 to 16, respectively.
The polishing buff of Example 17 is the same as that of Example 1. The polishing buff of Example 18 is the same as that of Example 2. The polishing buff of Example 19 is the same as that of Example 3. The polishing buff of Example 20 is the same as that of Example 4. The polishing buff of Example 21 is the same as that of Example 5. The polishing buff of Example 22 is the same as that of Example 6. The polishing buff of Example 23 is the same as that of Example 7. The polishing buff of Example 24 is the same as that of Example 8. The polishing buff of Example 25 is the same as that of Example 9. The polishing buff of Example 26 is the same as that of Example 10. The polishing buff of Example 27 is the same as that of Example 11. The polishing buff of Example 28 is the same as that of Example 12. The polishing buff of Example 29 is the same as that of Example 13. The polishing buff of Example 30 is the same as that of Example 14. The polishing buff of Example 31 is the same as that of Example 15. The polishing buff of Example 32 is the same as that of Example 16.

Each object to be polished used in Examples 17 to 32 is made of a tempered glass. Each object to be polished has a square surface to be polished of 500 mm x 500 nm. The surface to be polished is uneven. The unevenness is formed as a result of chemical cleaning using hydrogen fluoride, and causes white turbidity on each surface to be polished. Further, an oil film and scaly water scale are strongly adhered to each surface to be polished.
In Examples 17 to 32, the inventor of the present invention carried out a polishing operation of a surface to be polished by pouring the abrasive into each polishing buff, and causing each polishing buff to rotate using a rotary tool to press the rotating polishing buff against the surface to be polished of each object to be polished. Each rotary tool used in Examples 17 to 32 rotated at a speed of 2000 rpm. The results of the polishing operations in Examples 17 to 32 are shown in Table 2.

In Examples 17 to 32, each surface was checked for scratches after the polishing operation. The scratches were checked by observing each surface under sunlight with the naked eye.
Also, in Examples 17 to 32, the work efficiency of the polishing operation was evaluated using the following 5 grades of A, B, C, D, and E. The case where water scale, oil film and white turbidity were removed from the surface to be polished within ten minutes was evaluated as grade A work efficiency. The case where water scale, oil film and white turbidity were removed from the surface to be polished within ten to thirty minutes was evaluated as grade B work efficiency. The case where water scale, oil film and white turbidity were removed from the surface to be polished within thirty to sixty minutes was evaluated as grade C work efficiency. The case where sixty minutes or more was required to remove water scale, oil film and white turbidity from the surface to be polished was evaluated as grade D work efficiency. The case where a scratch visible to the naked eye under sunlight was formed on the surface to be polished was evaluated as grade E work efficiency.

That is, when an object to be polished is a tempered glass, use of a polishing buff employed in an example demonstrating grade A work efficiency is most preferable, as it enables a quick and complete polishing operation. A polishing buff used in an example demonstrating grade E work efficiency is not preferable, as it causes scratches on the surface to be polished.
The results showed that for all of Examples 17 to 32, no visible scratch was observed on the surfaces to be polished. Examples 30 and 32 were evaluated as grade A work efficiency. Examples 18 to 29, and 31 were evaluated as grade C work efficiency. Example 17 was evaluated as grade D work efficiency.

In addition, in Example 29, the nonwoven fabric for the polishing surface of the polishing buff was torn, and the lifetime of the polishing buff was short.
Therefore, it was confirmed that when an object to be polished is a tempered glass, the polishing buffs of Examples 30 and 32 are the most preferable. Also, it was confirmed that the polishing buffs of Examples 18 to 29, and 31 enable a relatively slow but complete polishing operation. Furthermore, it was confirmed that the polishing buff of Example 17 enables a quite slow but complete polishing operation. However, it was also confirmed that the polishing buff of Example 29 promotes the exhaustion of the polishing buff.

Next, the abrasives, polishing buffs, and objects to be polished used in Examples 33 to 48 are shown in Table 3.

**[Table 3]**

| | Abrasive | | | Polishing Buff | | Object to Be Polished | Evaluation of Work Efficiency | Scratches on Polished Surface After Work |
|---|---|---|---|---|---|---|---|---|
| | Particle Size of Hollow Particles | Particle Size of Ground Hollow Particles | Particle Size of Cerium Oxide Particles | Configuration | Materials | | | |
| Example 33 | 15 µm | 5 µm | 3 µm | sponge | Sponge consists of 100% by mass of urethane. | Stainless steel plate | E | Visible |
| Example 34 | 15 µm | 5 µm | 3 µm | sponge + woven fabric | Sponge consists of 100% by mass of urethane. Woven fabric consists of 100% by mass of cotton. | Stainless steel plate | E | Visible |
| Example 35 | 15 µm | 5 µm | 3 µm | sponge + woven fabric | Sponge consists of 100% by mass of urethane. Woven fabric consists of 100% by mass of wool. | Stainless steel plate | E | Visible |
| Example 36 | 15 µm | 5 µm | 3 µm | sponge + woven fabric | Sponge consists of 100% by mass of urethane. Woven fabric consists of 100% by mass of rayon. | Stainless steel plate | E | Visible |
| Example 37 | 15 µm | 5 µm | 3 µm | sponge + woven fabric | Sponge consists of 100% by mass of urethane. Woven fabric consists of 75% by mass of polyester and the remaining portion of nylon. | Stainless steel plate | E | Visible |
| Example 38 | 15 µm | 5 µm | 3 µm | sponge + woven fabric | Sponge consists of 100% by mass of urethane. Woven fabric consists of 100% by mass of polyester. | Stainless steel plate | E | Visible |
| Example 39 | 15 µm | 5 µm | 3 µm | sponge + non-woven fabric | Sponge consists of 100% by mass of urethane. Non-woven fabric consists of 100% by mass of polyester. | Stainless steel plate | E | Visible |
| Example 40 | 15 µm | 5 µm | 3 µm | sponge + non-woven fabric | Sponge consists of 100% by mass of urethane. Non-woven fabric consists of 75% by mass of polyester and the remaining portion of rayon. | Stainless steel plate | E | Visible |
| Example 41 | 15 µm | 5 µm | 3 µm | sponge + nun-woven fabric | Sponge consists of 100% by mass of urethane. Non-woven fabric consists of 65% by mass of polyester and the remaining portion of rayon. | Stainless steel plate | A | None |
| Example 42 | 15 µm | 5 µm | 3 µm | sponge + non-woven fabric | Sponge consists of 100% by mass of urethane. Non-woven fabric consists of 60% by mass of polyester and the remaining portion of rayon. | Stainless steel plate | A | None |
| Example 43 | 15 µm | 5 µm | 3 µm | sponge + non-woven fabric | Sponge consists of 100% by mass of urethane. Non-woven fabric consists of 55% by mass of polyester and the remaining portion of rayon. | Stainless steel plate | A | None |
| Example 44 | 15 µm | 5 µm | 3 µm | sponge + non-woven fabric | Sponge consists of 100% by mass of urethane. Non-woven fabric consists of 50% by mass of polyester and the remaining portion of rayon. | Stainless steel plate | B | None |
| Example 45 | 15 µm | 5 µm | 3 µm | sponge + non-woven fabric | Sponge consists of 100% by mass of urethane. Non-woven fabric consists of 30% by mass of polyester and the remaining portion of rayon. | Stainless steel plate | B | None |
| Example 46 | 15 µm | 5 µm | 3 µm | sponge + non-woven fabric | Sponge consists of 100% by mass of urethane. Non-woven fabric consists of 100% by mass of nylon. | Stainless steel plate | E | Visible |
| Example 47 | 15 µm | 5 µm | 3 µm | sponge + non-woven fabric | Sponge consists of 100% by mass of urethane. Non-woven fabric consists of 100% by mass of cotton (felt). | Stainless steel plate | B | None |
| Example 48 | 15 µm | 5 µm | 3 µm | sponge + non-woven fabric | Sponge consists of 100% by mass of urethane. Non-woven fabric has a front surface treated by aluminium deposition. | Stainless steel plate | E | Visible |

As shown in Table 3, each abrasive used in Examples 33 to 48 is the abrasive described in the first embodiment. Shirasu balloons which are the hollow particles have a particle size of 15 µm, the ground pieces of the Shirasu balloons which are the ground hollow particles have a particle size of 5 µm, and the cerium oxide particles have a particle size of 3 µm.
The polishing buff of Example 33 is the same as that of Example 1. The polishing buff of Example 34 is the same as that of Example 2. The polishing buff of Example 35 is the same as that of Example 3. The polishing buff of Example 36 is the same as that of Example 4. The polishing buff of Example 37 is the same as that of Example 5. The polishing buff of Example 38 is the same as that of Example 6. The polishing buff of Example 39 is the same as that of Example 7. The polishing buff of Example 40 is the same as that of Example 8. The polishing buff of Example 41 is the same as that of Example 9. The polishing buff of Example 42 is the same as that of Example 10. The polishing buff of Example 43 is the same as that of Example 11. The polishing buff of Example 44 is the same as that of Example 12. The polishing buff of Example 45 is the same as that of Example 13. The polishing buff of Example 46 is the same as that of Example 14. The polishing buff of Example 47 is the same as that of Example 15. The polishing buff of Example 48 is the same as that of Example 16.

Each object to be polished used in Examples 33 to 48 is a SUS304 stainless steel plate. Each object to be polished has a square surface to be polished of 500 mm x 500 mm. Oil film and scaly water scale are strongly adhered to each surface to be polished, which makes each surface to be polished cloudy.
In Examples 33 to 48, the inventor of the present invention carried out a polishing operation of a surface to be polished by pouring the abrasive into each polishing buff, and causing each polishing buff to rotate using a rotary tool to press the rotating polishing buff against the surface to be polished of each object to be polished. Each rotary tool used in Examples 33 to 48 rotated at a speed of 1300 rpm. The results of the polishing operation in Examples 33 to 48 are shown in Table 3.

In Examples 33 to 48, each surface to be polished was checked for scratches after the polishing operation. The scratches were checked by observing each surface to be polished under sunlight with the naked eye.
Also, in Examples 33 to 48, the work efficiency of the polishing operation was evaluated using the following 5 grades of A, B, C, D, and E. The case where water scale, oil film and cloudiness were removed from the surface to be polished and the surface to be polished was polished to a mirror finish within ten minutes was evaluated as grade A work efficiency. The case where water scale, oil film and cloudiness were removed from the surface to be polished and the surface to be polished was polished to a mirror finish within ten to thirty minutes was evaluated as grade B work efficiency. The case where water scale, oil film and cloudiness were removed from the surface to be polished and the surface to be polished was polished to a mirror finish within thirty to sixty minutes was evaluated as grade C work efficiency. The case where sixty minutes or more was required to remove water scale, oil film and cloudiness from the surface to be polished and to polish the surface to be polished to a mirror finish was evaluated as grade D work efficiency. The case where a scratch visible to the naked eye under sunlight was formed on the surface to be polished was evaluated as grade E work efficiency.

That is, in order to polish an object which is a stainless steel plate having a surface to be polished to a mirror finish, use of a polishing buff employed in an example demonstrating grade A work efficiency is most preferable, as it enables a quick and complete polishing operation. A polishing buff employed in an example demonstrating grade E work efficiency is not preferable, as it causes scratches on a surface to be polished.
As a result, Examples 41 to 43 without visible scratches on the surface to be polished were evaluated as grade A work efficiency. Examples 44, 45, and 47 without visible scratches on the surface to be polished were evaluated as grade B work efficiency. Examples 33 to 40, 46, and 48 with visible scratches on the surface to be polished were evaluated as grade E work efficiency.

In addition, in Example 45, the nonwoven fabric for the polishing surface of the polishing buff was torn, and the lifetime of the polishing buff was short.
Therefore, it was confirmed that when an object to be polished is a stainless steel plate and the surface of the plate is polished to a mirror finish, the polishing buffs of Examples 41 to 43 are the most preferable. Also, it was confirmed that the polishing buffs of Examples 44, 45 and 47 enable a relatively quick and complete mirror finish. However, it was also confirmed that the polishing buff of Example 45 promotes the exhaustion of the polishing buff.

Furthermore, the inventor of the present invention conducted a test of the hollow particles, the ground hollow particles, and the cerium oxide particles in an abrasive according to the present invention to verify the effects of the hollow particles, the ground hollow particles, and the cerium oxide particles. The effects will now be explained by way of Verification Examples.
In Verification Examples 1 to 5, the inventor of the present invention verified the effect of the hollow particles included in an abrasive according to the present invention.
In Verification Examples 1 to 5, the inventor of the present invention individually prepared the abrasives including hollow particles, a thickener, and water. In the abrasives of Verification Examples 1 to 5, the hollow particles are dispersed by means of the thickener. The abrasives of Verification Examples 1 to 5 are identical except that the included hollow particles have a different mean particle size. The hollow particles in each abrasive of Verification Examples 1 to 5 are Shirasu balloons.

The hollow particles in the abrasive of Verification Example 1 have a mean particle size of 8.26 µm.
The hollow particles in the abrasive of Verification Example 2 have a mean particle size of 10.06 µm.
The hollow particles in the abrasive of Verification Example 3 have a mean particle size of 59.87 µm.
The hollow particles in the abrasive of Verification Example 4 have a mean particle size of 96.53 µm.
The hollow particles in the abrasive of Verification Example 5 have a mean particle size of 120.96 µm.
In Verification Examples 1 to 5, the inventor of the present invention prepared the polishing buff of Example 10.

In Verification Examples 1 to 5, the inventor of the present invention individually prepared a soft glass as an object to be polished. Each object to be polished of Verification Examples 1 to 5 is a float glass, and has a rectangular surface to be polished. Each surface to be polished has a length of 300 mm and a width of 400 mm. For thirty days, the inventor of the present invention sprayed water over the surface to be polished of each object to be polished of Verification Examples 1 to 5 twice a day, and left them outside. As a result, scaly water scale was formed on the surface to be polished of each object to be polished of Verification Examples 1 to 5.

In Verification Examples 1 to 5, in order to polish a surface to be polished of each object to be polished, the inventor of the present invention poured the abrasive into each polishing buff, which was rotated by a rotary tool, and pressed the rotating buff against the surface. The rotary tools used in Verification Examples 1 to 5 rotated at a speed of 2000 rpm. The inventor of the present invention polished the same part of a surface to be polished of an object to be polished ten times in total number by pressing the rotating polishing buff against the part.
After the polishing operation was completed, the inventor of the present invention observed the surface to be polished of the object to be polished of Verification Examples 1 to 5 under sunlight with the naked eye. The observation results are as follows.

In Verification Example 1, the water scale on the surface to be polished of the object to be polished was hardly removed. It is expected that the water scale on the surface to be polished of the object to be polished could be completely removed by increasing the number of times that the rotating polishing buff is pressed against the surface. However, it is considered that in that case the polishing operation would take an extremely long time, lowering the work efficiency of the polishing operation.
In Verification Example 2, a part of the water scale on the surface to be polished of the object to be polished was not removed. It is expected that the water scale on the surface to be polished of the object to be polished could be completely removed by increasing the number of times that the rotating polishing buff is pressed against the surface. However, it is considered that in this case the polishing operation would take a long time, lowering the work efficiency of the polishing operation. A comparison between the abrasive of Verification Example 1 and the abrasive of Verification Example 2 reveals that a polishing operation using the abrasive of Verification Example 1 requires more time, resulting in lower work efficiency.

In Verification Example 3, the water scale on the surface to be polished of the object to be polished was completely removed, and no scratches visible to the naked eye were observed on the surface to be polished of the object to be polished.
In Verification Example 4, the water scale on the surface to be polished of the object to be polished was completely removed, and no scratches visible to the naked eye were observed on the surface to be polished of the object to be polished.
In Verification Example 5, the water scale on the surface to be polished of the object to be polished was completely removed, but fine scratches visible to the naked eye were observed on the surface to be polished of the object to be polished.

The above results indicate that, in order to scrape off water scale from a surface to be polished without causing scratches visible to the naked eye on the surface to be polished, the hollow particles having the mean particle sizes of Verification Examples 1 to 4 are necessary. The results also indicate that, in a case where a certain number of work hours is allowed, in order to scrape off water scale from a surface to be polished without causing scratches visible to the naked eye on the surface to be polished, the hollow particles having the mean particle sizes of Verification Examples 2 to 4 are necessary. The results also indicate that, in order to efficiently scrape off water scale from a surface to be polished without causing scratches visible to the naked eye on the surface to be polished, the hollow particles having the mean particle size of Verification Example 3 or 4 are necessary.

The above results also indicate that, in a case where fine scratches visible to the naked eye are allowed to be formed on a surface to be polished, the hollow particles having the mean particle size of Verification Example 5 can be used to efficiently scrape off water scale from the surface to be polished. The results also indicate that, in order to efficiently scrape off water scale from the surface to be polished and form fine scratches visible to the naked eye on the surface to be polished at the same time, the hollow particles having the mean particle size of Verification Example 5 are necessary.
Next, in Verification Examples 6 to 10, the inventor of the present invention verified the effect of the ground hollow particles included in an abrasive according to the present invention.

In Verification Examples 6 to 10, the inventor of the present invention prepared abrasives which individually include ground hollow particles, a thickener, and water. In the abrasives of Verification Examples 6 to 10, the ground hollow particles are dispersed by means of the thickener. The abrasives of Verification Examples 6 to 10 are identical except that the included ground hollow particles have a different mean particle size. The ground hollow particles in each abrasive of Verification Examples 6 to 10 are ground Shirasu balloons.
The ground hollow particles in the abrasive of Verification Example 6 have a mean particle size of 3.54 µm.

The ground hollow particles in the abrasive of Verification Example 7 have a mean particle size of 5.86 µm.
The ground hollow particles in the abrasive of Verification Example 8 have a mean particle size of 17.82 µm.
The ground hollow particles in the abrasive of Verification Example 9 have a mean particle size of 31.32 µm.
The ground hollow particles in the abrasive of Verification Example 10 have a mean particle size of 40.62 µm.
In Verification Examples 6 to 10, the inventor of the present invention prepared the polishing buff of Example 10.

In Verification Examples 6 to 10, the inventor of the present invention prepared a soft glass as an object to be polished. Each object to be polished of Verification Examples 6 to 10 is a float glass, and has a rectangular surface to be polished. Each surface to be polished has a length of 300 mm and a width of 400 mm. For thirty days, the inventor of the present invention wiped each surface to be polished of the object to be polished of Verification Examples 6 to 10 with a cloth in which lubrication oil and water were immersed every day, exposed the surfaces to exhaust gas from a gasoline automobile for thirty minutes every day, and left them outside. As a result, an oil film was formed on the surface to be polished of each object to be polished of Verification Examples 6 to 10.

In Verification Examples 6 to 10, the inventor of the present invention carried out a polishing operation of a surface to be polished by pouring the abrasive into each polishing buff, and causing each polishing buff to rotate using a rotary tool to press the rotating polishing buff against the surface to be polished of each object to be polished. Each rotary tool used in Verification Examples 6 to 10 rotated at a speed of 2000 rpm. The inventor of the present invention polished the same part of a surface to be polished of an object to be polished ten times in total number by pressing the rotating polishing buff against the part.
After the polishing operation was completed, the inventor of the present invention observed the surface to be polished of the object to be polished of Verification Examples 6 to 10 under sunlight with the naked eye. The observation results are as follows.

In Verification Example 6, the oil film on the surface to be polished of the object to be polished was not removed at all. It is believed that the oil film on the surface to be polished of the object to be polished could not be removed even by increasing the number of times that the rotating polishing buff is pressed against the surface.
In Verification Example 7, a part of the oil film on the surface to be polished of the object to be polished was not removed. It is expected that an increased number of polishings by pressing the rotating polishing buff against the surface to be polished of the object to be polished would completely remove the water scale on the surface to be polished of the object to be polished. However, it is considered that in that case the polishing operation would take a long time, lowering the work efficiency.

In Verification Example 8, the oil film on the surface to be polished of the object to be polished was completely removed, and no scratches visible to the naked eye were observed on the surface to be polished of the object to be polished.
In Verification Example 9, the oil film on the surface to be polished of the object to be polished was completely removed, and no scratches visible to the naked eye were observed on the surface to be polished of the object to be polished. A comparison between the abrasive of Verification Example 8 and the abrasive of Verification Example 9 reveals that the minimum number of times the rotating polishing buff must be pressed against the surface to be polished of the object to be polished in order to completely remove the oil film from the surface to be polished is less for the abrasive of Verification Example 9 than for the abrasive of Verification Example 8. Therefore, a polishing operation using the abrasive of Verification Example 9 takes less time and achieves higher work efficiency in a polishing operation than the abrasive of Verification Example 8.

In Verification Example 10, the oil film on the surface to be polished of the object to be polished was completely removed, but fine scratches visible to the naked eye were observed on the surface to be polished of the object to be polished.
The above results indicate that, in a case where a certain number of work hours is allowed, in order to scrape off oil film from a surface to be polished without causing scratches visible to the naked eye on the surface to be polished, the ground hollow particles having the mean particle size of Verification Examples 7 to 9 are necessary. The results also indicate that, in a case where a work efficiency of a certain level is required, in order to scrape off oil film from a surface to be polished without causing scratches visible to the naked eye on the surface to be polished, the ground hollow particles having the mean particle size of Verification Example 8 or 9 are necessary. The results further indicate that, in order to efficiently scrape off oil film from a surface to be polished without causing scratches visible to the naked eye on the surface to be polished, the ground hollow particles having the mean particle size of Verification Example 9 are necessary.

The above results indicate that in a case where fine scratches visible to the naked eye are allowed to be formed on a surface to be polished, the ground hollow particles having the mean particle size of Verification Example 10 can be used to efficiently scrape off oil film from a surface to be polished. The results also indicate that, in a case where oil film has to be efficiently scraped off from the surface to be polished and also fine scratches visible to the naked eye have to be formed on the surface to be polished at the same time, the ground hollow particles having the mean particle size of Verification Example 10 are necessary.
Next, in Verification Examples 11 to 14, the inventor of the present invention verified the effect of the cerium oxide particles included in an abrasive according to the present invention.

In Verification Examples 11 to 14, the inventor of the present invention prepared abrasives which individually include cerium oxide particles, a thickener, and water. In the abrasives of Verification Examples 11 to 14, the cerium oxide particles are dispersed by means of the thickener. The abrasives of Verification Examples 11 to 14 are identical except that the included cerium oxide particles have a different mean particle size.
The cerium oxide particles in the abrasive of Verification Example 11 have a particle size of 0.1 to 0.2 µm.
The cerium oxide particles in the abrasive of Verification Example 12 have a particle size of 0.5 µm.

The cerium oxide particles in the abrasive of Verification Example 13 have a particle size of 1.2 to 2.5 µm.
The cerium oxide particles in the abrasive of Verification Example 14 have a particle size of 3.0 to 5.0 µm.
In Verification Examples 11 to 14, the inventor of the present invention prepared the polishing buff of Example 10.
In Verification Examples 11 to 14, the inventor of the present invention prepared a soft glass as an object to be polished. Each object to be polished of Verification Examples 11 to 14 is a float glass, and has a rectangular surface to be polished. Each surface to be polished has a length of 300 mm and a width of 400 mm. For thirty days, the inventor of the present invention wiped each surface to be polished of the object to be polished of Verification Examples 11 to 14 with a cloth which has a diluent of hydrogen fluoride therein, and washed off with water once every three days. As a result, the surface to be polished of each object to be polished of Verification Examples 11 to 14 was etched by hydrogen fluoride, which caused white turbidity and cloudiness on the surface.

In Verification Examples 11 to 14, the inventor of the present invention carried out a polishing operation of a surface to be polished by pouring the abrasive into each polishing buff, and causing each polishing buff to rotate using a rotary tool to press the rotating polishing buff against the surface to be polished of each object to be polished. Each rotary tool used in Verification Examples 11 to 14 rotated at a speed of 2000 rpm. The inventor of the present invention polished the same part of a surface to be polished of an object to be polished ten times in total number by pressing the rotating polishing buff against the part.
After the polishing operation was completed, the inventor of the present invention observed the surface to be polished of the object to be polished of Verification Examples 11 to 14 under sunlight with the naked eye. The observation results are as follows.

In Verification Example 11, the surface to be polished of the object to be polished recovered transparency to some degree. However, cloudiness still remained on the surface to be polished. The number of times of pressing the rotating polishing buff against the surface to be polished of the object to be polished was increased, but still the cloudiness on the surface to be polished was not removed.
In Verification Example 12, the surface to be polished of the object to be polished recovered transparency. However, white turbidity as cloudiness slightly remained on the surface to be polished. By increasing the number of times for pressing the rotating polishing buff against the surface to be polished of the object to be polished, the cloudiness could be completely removed from the surface to be polished.

In Verification Example 13, the surface to be polished of the object to be polished recovered transparency, the white turbidity was removed from the surface to be polished, and no cloudiness remained.
In Verification Example 14, the surface to be polished of the object to be polished recovered transparency, the white turbidity was removed from the surface to be polished, and no cloudiness remained. A comparison between the abrasive of Verification Example 13 and the abrasive of Verification Example 14 reveals that the minimum number of times the rotating polishing buff must be pressed against the surface to be polished of the object to be polished in order to completely remove the white turbidity from the surface to be polished is less for the abrasive of Verification Example 14 than for the abrasive of Verification Example 13. Therefore, a polishing operation using the abrasive of Verification Example 14 takes less time and achieves higher work efficiency in a polishing operation than the abrasive of Verification Example 13.

The above results indicate that in a case where a certain number of work hours is allowed, in order to completely remove white turbidity from a surface to be polished without leaving any cloudiness, the cerium oxide particles having the mean particle sizes of Verification Examples 12 to 14 are necessary. The results also indicate that, in a case where a work efficiency of a certain level is required, the cerium oxide particles having the mean particle size of Verification Example 13 or 14 are necessary in order to completely remove white turbidity from a surface to be polished without leaving any cloudiness. The results further indicate that, in order to efficiently and completely remove white turbidity from a surface to be polished without leaving any cloudiness, the cerium oxide particles having the mean particle size of Verification Example 14 are necessary.

### Industrial Applicability

An abrasive according to the present invention is useful to polish the surface of an article such as a glass product, porcelain enamel product, tile product, metal product, and the like, or a floor surface of a rock floor, wood floor, synthetic resin floor, linoleum floor, brick floor, metal floor, and the like.

## Claims

1. An abrasive, comprising:
hollow particles which are obtained by firing and expanding a volcanic glass;
ground hollow particles which are obtained by grinding the hollow particles;
a thickener; and
water,
wherein the contained hollow particles have a particle size of 10 to 100 µm, and
the contained ground hollow particles have a particle size of 5 to 30 µm.

2. An abrasive, comprising:
ground hollow particles which are obtained by grinding hollow particles of a fired and expanded volcanic glass;
cerium oxide particles;
a thickener; and water,
wherein the contained ground hollow particles have a particle size of 5 to 30 µm, and
the contained cerium oxide particles have a particle size of 0.5 to 5 µm.

3. An abrasive, comprising:
hollow particles which are obtained by firing and expanding a volcanic glass;
cerium oxide particles;
a thickener; and water,
wherein the contained hollow particles have a particle size of 10 to 100 µm, and
the contained cerium oxide particles have a particle size of 0.5 to 5 µm.

4. An abrasive, comprising:
hollow particles which are obtained by firing and expanding a volcanic glass;
ground hollow particles which are obtained by grinding the hollow particles;
cerium oxide particles;
a thickener; and water,
wherein the contained hollow particles have a particle size of 10 to 100 µm,
the contained ground hollow particles have a particle size of 5 to 30 µm, and
the contained cerium oxide particles have a particle size of 0.5 to 5 µm.

5. An abrasive, comprising:
hollow particles which are obtained by firing and expanding a volcanic glass;
a thickener; and water,
wherein the contained hollow particles have a particle size of 80 to 320 µm.

6. An abrasive, comprising:
ground hollow particles which are obtained by grinding hollow particles of a fired and expanded volcanic glass;
a thickener; and water,
wherein the contained ground hollow particles have a particle size of 50 to 200 µm.

7. An abrasive, comprising:
hollow particles which are obtained by firing and expanding a volcanic glass;
ground hollow particles which are obtained by grinding the hollow particles;
a thickener; and water,
wherein the contained hollow particles have a particle size of 80 to 320 µm, and
the contained ground hollow particles have a particle size of 50 to 200 µm.

8. The abrasive according to any one of claims 1 to 7, wherein the hollow particles are Shirasu balloons.

9. The abrasive according to any one of claims 1 to 7, wherein the hollow particles are perlite.
